(19) Europäisches Patentamt

European Patent Office

Office européen des brevets

(11) **EP 1 469 247 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
***F16L 37/088*** *(2006.01)*     ***F16J 15/02*** *(2006.01)*

(21) Anmeldenummer: **04008398.2**

(22) Anmeldetag: **07.04.2004**

(54) **Verbindungssystem für Leitungsorgane**

Pipe coupling system

Système de raccords de tuyaux

(84) Benannte Vertragsstaaten:
**AT BE BG CH CY CZ DE DK EE ES FI FR GB GR HU IE IT LI LU MC NL PL PT RO SE SI SK TR**

(30) Priorität: **10.09.2003 DE 20314133 U**
            **14.04.2003 EP 03008547**

(43) Veröffentlichungstag der Anmeldung:
**20.10.2004 Patentblatt 2004/43**

(73) Patentinhaber: **Voss Automotive GmbH**
**51688 Wipperfürth (DE)**

(72) Erfinder:
• **Hagen, Harald**
**51688 Wipperfürth (DE)**
• **Hoffmann, Martin**
**54329 Konz-Kommlingen (DE)**
• **Westmeier, Jörg**
**51688 Wipperfürth (DE)**
• **Kaminski, Volker**
**58553 Halver (DE)**
• **Terlau, Norbert**
**51515 Kürten (DE)**
• **Borgmeier, Olav**
**42499 Hückeswagen (DE)**
• **Mitterer, Reiner**
**51688 Wipperfürth (DE)**

(74) Vertreter: **Zapf, Christoph**
**Patentanwälte Dr. Solf und Zapf**
**Postfach 13 01 13**
**42028 Wuppertal (DE)**

(56) Entgegenhaltungen:
EP-A- 0 806 594       EP-A- 1 164 317
EP-A- 1 213 515       US-A- 2 365 574
US-A- 4 741 560

**Beschreibung**

Die vorliegende Erfindung betrifft ein Verbindungssystem für Leitungen, Armaturen oder Aggregate, die zur Führung eines mit einem gegenüber einem Vergleichsdruck erhöhten Druck beaufschlagten Fluids bestimmt sind, insbesondere für Kohlendioxid führende Systeme, umfassend ein erstes Kupplungsteil, wie ein Gehäuseteil, ein entlang einer Achse in das erste Kupplungsteil einführbares zweites Kupplungsteil, wie ein Steckerteil, und mindestens eine aus einem Elastomer bestehende, gaspermeable. Umfangsdichtung, die in einer, eine Nuttiefe und eine Nutlänge aufweisenden Nut angeordnet ist, welche umfangsgemäß in einem der beiden Kupplungsteile ausgebildet ist, wobei das eine Kupplungsteil mit einem Schaft in eine runde Aufnahmeöffnung des anderen Kupplungsteiles einsteckbar ist, die Umfangsdichtung nach dem Einstecken unter Deformation und Erzeugung einer radialen Vorpreßkaft einen Spalt mit einer Spaltweite zwischen dem Außenradius des Schaftes und dem Innenradius der Aufnahmeöffnung abdichtet und dabei zumindest über eine senkrecht zum jeweiligen Radius der Kupplungsteile in axialer Richtung verlaufende Kontaktlänge an den Kupplungsteilen anliegt.

Das Erfordernis einer Abdichtung entsteht überall dort, wo Räume mit unterschiedlichen Drücken voneinander getrennt werden müssen. Durch die Druckdifferenz entsteht bei einem Verbindungssystem der vorstehend beschriebenen Art in dem Spalt zwischen den Kupplungsteilen eine Strömung, die durch die Verwendung der Umfangsdichtung unterbunden werden soll. Für solche Dichtungen werden in derFluidtechnik überwiegend elastomere Werkstoffe, z.B. in Form von O-Ringen, eingesetzt. Voraussetzung für die Erzielung der Dichtwirkung ist dabei das Vorhandensein einer Vorpreßkraft bzw. Vorspannung gegen die abzudichtenden Flächen, die unter Ausnutzung der Formelastizität der Dichtung bei ihrem Einbau erzeugt wird.

Ein System, das zur Führung eines mit einem Druck beaufschlagten Fiutds bestimmt ist, stellt in Kraftfahrzeugen beispielsweise der Kältekreislauf von Klimaanlagen dar. In einem solchen System werden bisher verschiedene Halogen-Kohlehwasserstoff-Verbindungen, wie ein unter dem Namen R134a bekanntes, hauptsächlich aus Tetrafluoräthan bestehendes Kältemittel, eingesetzt. Da alle organischen Stoffe gasdurchlässig sind, kommt es trotz Einsatz der Dichtungen - hauptsächlich infolge von Permeation durch die Umfangsdichtung - zu einem unvermeidbaren Flüiclstrom des Kältemittels vom Raum des höheren in den Raum des niedrigeren Druckes (Partialdruckes).

Hierbei ist es bekannt, daß die durch Permeation verursachte Leckmenge durch die Betriebsbedingungen des Systems, wie Druck und Temperatur, die Permeabilität der für das Verbindungssystem eingesetzten Elastomerdichtungen und die Dichtungsgeometrie bestimmt wird.

Die Permeabilität wiederum ist materialabhängig und wird ursächlich durch die Löslichkeit des Fluids und seine Diffusionsgeschwindigkeit im Dichtungsmaterial beeinflußt. Man geht dabei davon aus, daß auf der Seite des höheren Drucks an der Dichtung eine Absorption, dann innerhalb der Dichtung eine Diffusion und schließlich auf der Seite des niedrigeren Drucks eine Desorption auftritt. Im stationären Zustand, d.h. bei Sättigung des Elastomers mit dem Fluid, werden dabei der Absorptions- und der Desorptionsprozeß durch das Henry-Gesetz und der Diffusionsprozeß durch das erste Fick'sche Gesetz beschrieben.

Zur Bestimmung der auftretenden Menge Q des infolge von Permeation durch die Umfangsdichtung durchgesetzten Fluids geht man ausgehend von diesen Gesetzen - wie in der DIN 53 536 beschrieben-von der Gleichung.

$$Q = P * t * \Delta p * \frac{A}{L} \tag{1}$$

aus, in der P die Permeationskonstante des Dichtungsmaterials, t die zugrundegelegte Zeit, z.B. ein Jahr, $\Delta p$ die abzudichtende Druckdifferenz zwischen einem erhöhten Druck $p_1$ des abzudichtenden Fluids und einem Vergleichsdruck $p_2$ und A/L ein Verhältnis der Querschnittsfläche A der deformierten Umfangsdichtung zu einer Permeationslänge L durch die Dichtung darstellt, wobei letztere durch die axiale Längserstreckung der deformierten Dichtung zwischen den beiden Kupplungsteilen bestimmt wird. Der Gleichung liegt dabei zu Grunde, daß die Dichtung als planparallele Platte aufgefaßt wird. Die Gleichung veranschaulicht eine lineare, proportionale Abhängigkeit der Menge Q des durch die Umfangsdichtung durchgesetzten Fluids - im Folgenden auch als Leckmenge bezeichnet - von der Querschnittsfläche A der deformierten Umfangsdichtung und eine lineare, proportionale Abhängigkeit vom Kehrwert der mittleren Permeationslänge L, woraus sich bei vorgegebenem Systemdruck p und vorgegebener Betriebsdauer t zur Erzielung einer geringen Leckmenge Q vom Grundsatz her ergibt, die Querschnittsfläche A der deformierten Umfangsdichtung möglichst klein und die mittlere Permeationslänge L möglichst groß zu wählen.

In der Praxis sind einer derartigen Dimensionierung jedoch Grenzen gesetzt, da zur Gewährleistung einer grundsätzlichen Funktionstautichkeit des Verbindungssystems unter dem Gesichtspunkt des Ausgleichens von Fertigungstoleranzen der Kupplungsteile die Querschnittsfläche der deformierten Umfangsdichtung in zur Gleichung gegenläufiger Weise möglichst groß gewählt werden muß.

Des Weiteren ist zu beachten, daß die Permeationskonstante P einen exponentiell ansteigenden Verlauf mit der Temperatur zeigt, was beispielsweise in dem Artikel "Gasdurchlässigkeit von Elastomeren" von W. Beckmann in Sonderdruck aus Kautschuk + Gummi Kunststoffe, 44. Jg., Heft 4/91, Seiten 323-329, Dr. Alfred Hüthig Verlag, Heidelberg beschrieben ist.

Aus der DE 100 47 872 A1 ist ein Leitungsverbinder bekannt, bei dem unter Berücksichtigung des genannten Grundsatzes das Dichtungsmaterial sich in bevorzugter Ausführung über eine Länge erstreckt, die sehr viel größer ist als seine radial gemessene Dichtungsdicke, woraus sich nachteiligerweise aber aufgrund der Tatsache, daß kraftschlüssige Verbindungen unter pulsierendem Druck dazu neigen, sich zu lockern, bei dem bekannten System die Notwendigkeit ergibt, die Dichtung mittels eines selbsthemmenden Keils zu verpressen.

Bei einem im Betrieb auftretenden Druck des Kältemittels R134a, dessen oberes Niveau etwa bei 30 bar und dessen unteres Niveau etwa bei 3 bar liegt, wird bisher eine Leckmenge Q von nicht weniger als 5 bis 9 g pro Jahr und Verbindung erreicht und toleriert. Da die genannten Fluor-Kohlenwasserstoffe ein hohes sogenanntes Treibhaus-Pötentiäl aufweisen und unter Bildung von giftigen bzw. reizenden Spaltprodukten abgebaut werden, entsteht daher bei der Vielzahl von mit Klimaanlagen ausgerüsteten Kraftfahrzeugen, derzeit allein in Deutschland etwa zwölf Millionen, eine hohe Umweltgefährdung.

In der Kraftfahrzeugtechnik werden aufgrund dessen erhebliche Anstrengungen unternommen, die bekannten Kältemittel durch weniger bedenkliche Stoffe, insbesondere durch das in der Natur ohnehin vorkommende und beispielsweise durch die Fotosynthese der Pflanzen natürlich abbaubare Kohlendioxid, zu substituieren. Der Einsatz von Kohlendioxid als Kältemittel in einer Klimaanlage ist mit dem Vorteil einer vielfach höheren volumenstrombezogenen Kälteleistung verbunden, erfordert jedoch auch den Übergang zu erhöhten Drücken und Temperaturen bei den Wärmeaustauschprozessen. So ist für den im Betrieb einer $CO_2$-Klimaanlage auftretenden Druck ein oberes Niveau von etwa 180 bar und bei einer Temperatur von - 40 °C ein unteres Niveau von etwa 10 bar charakteristisch, wodurch sich die aufgezeigte Problematik der Abdichtung noch verschärft. Die geforderte Temperaturbeständigkeit der Verbindung im oberen Bereich liegt dabei bei 200 °C, so daß mit sehr großen Permeationskonstanten zu rechnen ist. Außerdem muß beim Einsatz von Kohlendioxid beachtet werden; daß dieses in einer Reihe der Gase nach Stickstoff, Sauerstoff, Helium und Wasserstoff die relativ größte Permeationskonstante für die meisten üblichen Dichtungswerkstoffe aufweist, wie dies beispielsweise aus einer entsprechenden Gegenüberstellung in dem vorgenannten Artikel hervorgeht.

In dem deutschen Gebrauchsmuster DE 200 02 810 U1 wurde ein Verbindungssystem mit einem speziellen Dichtungsteil beschrieben, das aus einem elastomerbeschichteten Wellrohr besteht. Dieses Dichtungsteil soll die Dichtungsanforderungen für Gase, wie Kohlendioxid oder Wasserstoff, erfüllen und axial soweit elastisch sein, daß es in einem herkömmlichen Stecksystem mit axialem Spiel eingesetzt werden kann. Diese Steckkupplung hat sich grundsätzlich in der Praxis bewährt, wobei jedoch in Verbindung mit den elastomerbeschichteten metallischen Dichtungselementen nachteiligerweise hohe Steckkräfte und schwer einzuhaltende Fertigungstoleranzen auftraten.

Die EP 1 164 317 A2 beschreibt eine Dichtungsstruktur für Gehäuseteile, die zur Führung eines mit einem gegenüber.einem Vergleichsdruck erhöhte Druck beaufschlagten Fluids, insbesondere Kohlendioxid, bestimmt ist. Die Struktur umfaßt ein erstes Gehäuseteil und ein mittels Bolzen an dem ersten Gehäuseteil befestigbares zweites Gehäuseteil sowie eine aus einem Elastomer bestehende, gaspermeable Umfangsdichtung, die in einer Nut des zweiten Gehäuseteils angeordnet und durch einen O-Ring gebildet ist. Die Umfangsdichtung dichtet unter Deformation und Erzeugung einer radialen Vorpreßkaft einen Spalt zwischen dem Außenradius des zweiten Gehäuseteiles und dem Innenradius des ersten Gehäuseteiles ab und liegt dabei zumindest über eine senkrecht zum jeweiligen Radius der Kupplungsteile in axialer Richtung verlaufende Kontaktlänge an den Gehäuseteilen an. Zur Erhöhung der Effizienz der Abdichtung ist ein, vorzugsweise aus Metall bestehender, Blockring vorgesehen, der den O-Ring auf der Seite des abzudichtenden Spaltes abstützt und der eine geringere Gaspermeabilität aufweist als der O-Ring.

Der vorliegenden Erfindung liegt die Aufgabe zu Grunde, ein Verbindungssystem der eingangs genannten Art zu schaffen, das ohne zusätzlich notwendige Stütz- oder Montagehilfen für die Dichtung, wie einen selbsthemmenden Keil oder dergleichen, bei einer geringen Menge des durch die Umfangsdichtung durchgesetzten Fluids unter hohen Systemdrücken, insbesondere unter Systemdrücken von bis zu mehr als 150 bar, und bei Beständigkeit im Temperaturbereich von -40 °C bis über 200 °C niedrige bei der Montage auftretende Steckkräfte und eine hohe Funktionssicherheit, d.h. einen zuverlässigen Ausgleich der Fertigungstoleranzen der Kupplungsteile, gewährleistet.

Erfindungsgemäß wird dies dadurch erreicht, daß der Querschnitt der unverpreßten Umfangsdichtung, die Nuttiefe und die Spaltweite sowie die Nutlänge derart aufeinander abgestimmt sind, daß in einem, eine Permeation durch die Umfangsdichturig bestimmenden Verhältnis einer permeationswirksamen Teilumfangsfläche der Urtlfangsdichtung zu der Kontaktlänge die Teilumfangsfläche nicht größer ist als der halbe Wert einer senkrecht zur axialen Richtung verlaufenden Querschnittsfläche der deformierten Umfangsdichtung.

Der Erfindung liegt zunächst die Erkenntnis zu Grunde, daß es möglich ist, durch eine gezielte Abstimmung der genannten Größen aufeinander in einem Verbindungssystem eine Abdichtung zu schaffen, bei der eine Permeation durch die Umfangsdichtung nicht durch das Verhältnis der in axialer Richtung vertaüfenden Qüerschntttsfläche der deformierten Umfangsdichtung zur axialen Länge der Umfangsdichtung bestimmt wird, sondern durch das Verhältnis einer permeationswirksamen Teilumfangsfläche der Umfangsdichtung zu der Kontaktlänge, über die die Umfangsdichtung senkrecht zum jeweiligen Radius der Kupplungsteile in axialer Richtung an den Kupplungsteilen anliegt. Des Weiteren liegt der Erfindung die Erkenntnis zu Grunde, daß diese Teilumfangsfläche durch die Abstimmung der genannten Größen aufeinander sehr viel kleiner gestaltet werden kann als die in axialer Richtung verlaufende Querschnittsfläche und daß dies, wenn das verringerte Verhältnis der Teilumfangsfläche zur Kontaktlänge bei der Anwendung der bekannten Berechnungsgleichung zur Dimensionierung der Dichtungsgeometrie berücksichtigt wird, zu konstruktiven Vorteilen führt, die sich bei einer vorgegebenen maximal zulässigen Leckmenge in verringerten notwendigen Steckkräften ausdrücken. Wenn im gesteckten Zustand der Kupplungsteile bei der Umfangsdichtung eine Einstellung des genannten Verhältnisses auf Werte erfolgt, die dadurch bestimmt werden, daß die Teilumfangsfläche nicht größer ist als der halbe Wert, vorzugsweise nicht größer als ein Fünftel, der senkrecht zur axialen Richtung verlaufenden Querschnittsfläche der deformierten Umfangsdichtung, kann den eingangs genannten kontradiktorischen technischen Forderungen in optimaler Weise Rechnung getragen werden. Dabei kann sogar erreicht werden, daß die permeationswirksame Teilumfangsfläche unabhängig von einer Schnurstärke der unverpreßten Umfangsdichtung ist.

Zur Einstellung der Verhältnisse der senkrecht zur axialen Richtung verlaufenden Querschnittsfläche und der Teilumfangsfläche der deformierten Umfangsdiehtung zu der genannten Kontaktlänge können dabei als variierbare, jedoch aufeinander abzustimmende Größen der Querschnitt der unverpreßten Umfangsdichtung, die Nuttiefe, die Nutlänge und die Spaltweite gewählt werden.

Dabei kommt vorteilhafterweise zum Tragen, daß sich aus der Summe aus Nuttiefe und Spaltweite eine Breite der senkrecht zur axialen Richtung verlaufenden Querschnittsfläche der deformierten Umfangsdichtung ergibt, die die Verpressung der Umfangsdichtung und damit eine Vorpreßkraft bestimmt, wobei eine konkrete Festlegung der einzelnen Dimensionen vorzugsweise unter Beachtung der Hertz'schen Gleichungen zur Deformation elastischer Körper erfolgen kann. Dabei hat es sich unter dem Gesichtspunkt der Einstellung von niedrigen Steckkräften bei der Montage als besonders günstig erwiesen, wenn der Querschnitt der Umfangsdichtung im unverpreßten Zustand bereits eine Vorform aufweist, die dadurch beschrieben werden kann, daß ein Quotient aus einer axialen Haupterstreckung und einer radialen Haupterstreckung des Dichtungsquerschnitts einen Wert von größer 1, vorzugsweise von größer 2, aufweist, wie dies z.B. bei einem Ring mit elliptischer Querschnittsfläche der Fall ist.

Des Weiteren kann vorteilhafterweise unter Berücksichtigung einer möglichen Wärmeausdehnung der Umfangsdichtung als Quotient aus einem in der Nut liegenden Anteil des verpreßten, radialen Querschnitts der Umfangsdichtung und der sich aus Nuttiefe und Nutlänge ergebenden Querschnittsfläche der Nut ein Füllgrad der Nut bestimmt werden, über den die permeationswirksame Teilumfangfläche in ihrer Größe steuerbar ist.

Weitere vorteilhafte Ausgestaltungsmerkmale der Erfindung sind in den Unteransprüchen sowie der folgenden Beschreibung enthalten.

Anhand von mehrerer bevorzugter Ausführungsbeispiele soll im Folgenden die Erfindung näher erläutert werden. Dabei zeigen:

Fig. 1          im Längsschnitt, eine Darstellung eines erfindungsgemäßen Verbindungssystems,

Fig. 2          im Längsschnitt, eine Teildarstellung eines erfindungsgemäßen Verbindungsystems,

Fig. 3          eine diagrammatische Darstellung der Abhängigkeit der Menge eines Fluids, das infolge von Permeation durch eine mit Fluid gesättigte Umfangsdichtung eines Verbindungssystem durchgesetzt wird, von einem Flächen-Permeationslängen-Verhältnis,

Fig. 4          in perspektivischer, geschnittener Darstellung, zwei ineinander projizierte Ausführungsformen einer Umfangsdichtung für ein erfindungsgemäßes Verbindungssystem,

Fig. 5          eine planimetrische Darstellung zur Veranschaulichung einer Näherung der Scheitelkrümmungen einer Umfangsdichtung mit elliptischem Querschnitt durch Kreise,

Fig. 6          in gleichartiger Darstellung wie in Fig. 4 eine weitere Ausführungsform einer Umfangsdichtung für ein erfindungsgemäßes Verbindungssystem,

Fig. 7          eine Querschnittsdarstellung einer der in Fig. 6 dargestellten Umfangsdichtung ähnlichen Ausführungsform einer Umfangsdichtung für ein erfindungsgemäßes Verbindungssystem,

Fig. 8          in gleichartiger Darstellung wie in Fig. 2 eine Teildarstellung des erfindungsgemäßen Verbindungssystems mit einer Ausführungsform einer Umfangsdichtung nach der Art, wie sie in Fig. 6 und 7 dargestellt ist,

Fig. 9          in gleichartiger Darstellung wie in Fig. 5 und 7, eine weitere Ausführungsform einer Umfangsdichtung für ein erfindungsgemäßes Verbindungssystem,

Fig. 10a bis 10c   in schematisierter Schnittdarstellung, drei verschiedene Ausführungsformen von Umfangsdichtungen für ein erfindungsgemäßes Verbindungssystem mit Darstellung einer spezifischen Menge eines infolge von Permeation durch die jeweilige Umfangsdichtung durchgesetzten Fluids.

In den verschiedenen Figuren der Zeichnung sind gleiche und einander entsprechende Teile stets mit den gleichen Bezugszeichen versehen und werden daher im Folgenden in der Regel jeweils nur einmal beschrieben.

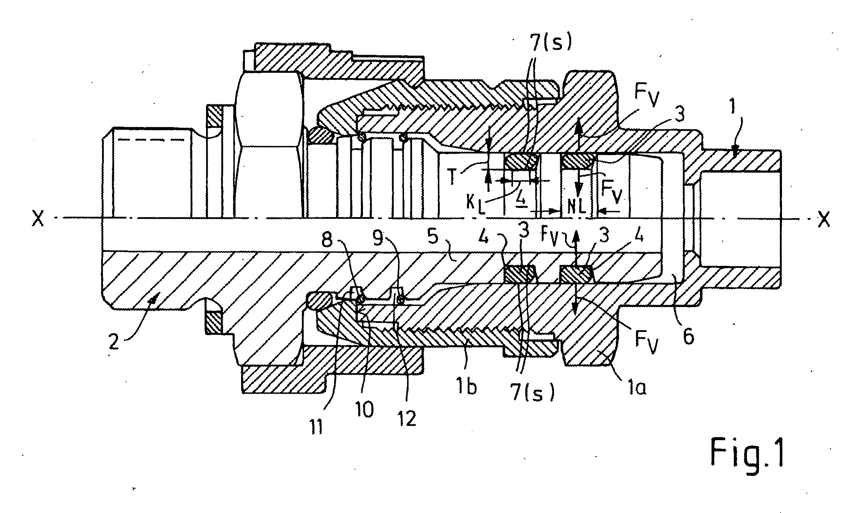

Wie sich zunächst aus Fig. 1 ergibt, umfaßt ein erfindungsgemäßes Verbindungssystem für fluidische Systeme, insbesondere für $CO_2$ führende Systeme, im dargestellten Fall eine Steckkupplung, ein erstes Kupplungsteil 1 in Form eines Gehäuses, ein entlang einer Achse X-X in das erste Kupplungsteil 1 einführbares zweites Kupplungsteil 2 in Form eines Steckerteiles, und mindestens eine, in der dargestellten Ausführung zwei, aus einem Elastomer bestehende Umfangsdichtungen 3. Die Umfangsdichtungen 3 sind jeweils in einer eine Nuttiefe T und eine Nutlänge NL aufweisenden Nut 4 angeordnet, welche umfangsgemäß in einem der beiden Kupplungsteile 1, 2 - in der dargestellten Ausführung im zweiten Kupplungsteil 2, dem Steckerteil - ausgebildet ist. Das zweite Kupplungsteil 2 weist einen in seiner Grundgestalt im Querschnitt runden Schaft 5 auf und ist damit in eine in ihrer Grundgestalt im Querschnitt runde Aufnahmeöffnung 6 des ersten Kupplungsteiles 1 einsteckbar. Die Nuten 4 verlaufen im Mantel des Schaftes 5 umfangsgemäß und parallel zueinander.

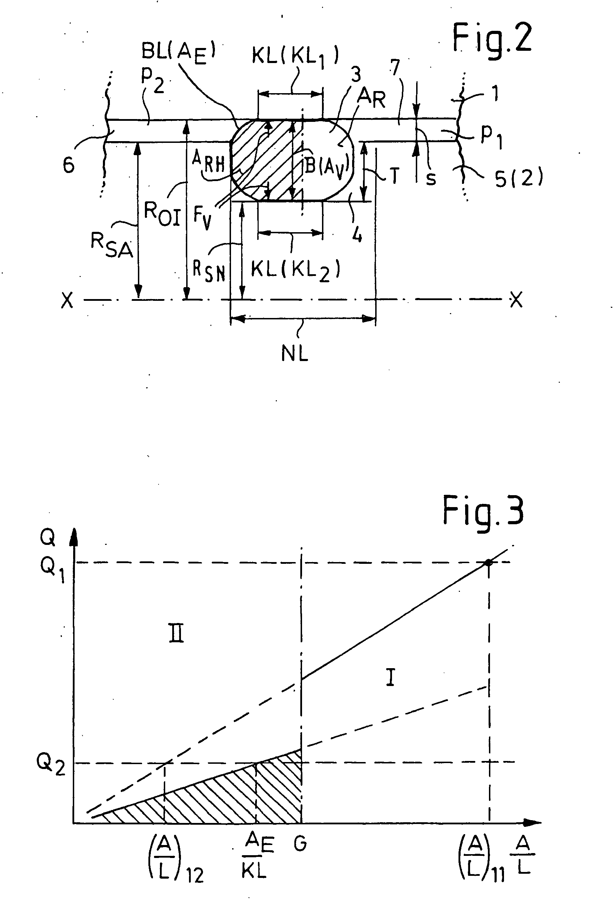

Die Umfangsdichtungen 3 verschließen nach dem Einstecken unter Deformation und Erzeugung einer radialen Vorpreßkaft $F_V$ jeweils einen Spalt 7 mit einer Spaltweite s, die in Fig. 1 nicht gut zu erkennen und daher dort nur mit einem in Klammern gesetzten Bezugszeichen "(s)" angedeutet ist. Eine deutliche Darstellung zeigt die Vergrößerung in Fig. 2.

Fig. 2 zeigt auch, daß sich der Spalt 7 zwischen dem Außenradius $R_{SA}$ des Schaftes 5 und dem Innenradius $R_{OI}$ der Aufnahmeöffnung 6 befindet. Die jeweilige Umfangsdichtung 3 verschließt den Spalt 7 und liegt dabei zumindest über eine senkrecht zum jeweiligen Radius $R_{SA}$, $R_{OI}$ der Kupplungsteile 1, 2 in axialer Richtung X-X verlaufende Kontaktlänge KL an den Kupplungsteilen 1, 2 an. Eine Breite B der senkrecht zur axialen Richtung X-X verlaufenden Querschnittsfläche $A_V$ der deformierten Umfangsdichtung 3 ergibt sich dabei aus der Summe aus Nuttiefe T und Spaltweite s bzw. aus der Differenz aus dem Innenradius $R_{OI}$ der Aufnahmeöffnung 6 und dem Radius $R_{SN}$ des zweiten Kupplungsteiles 2 im Bereich des Grundes seiner Nut 4. Die Querschnittsfläche $A_V$ selbst ergibt sich für einen zwischen den Kupplungsteilen 1, 2 ausgebildeten Kreisring zu $A_V = \Pi^*(R^2_{OI} - R^2_{SN})$ und ist daher in Fig. 2 mit einem in Klammern gesetzten Bezugszeichen "$(A_V)$" unter dem Bezugszeichen für die Breite B veranschaulicht. Die radiale Querschnittsfläche der verpreßten Umfangsdichtung 3 ist statt dessen mit dem Bezugszeichen $A_R$ gekennzeichnet.

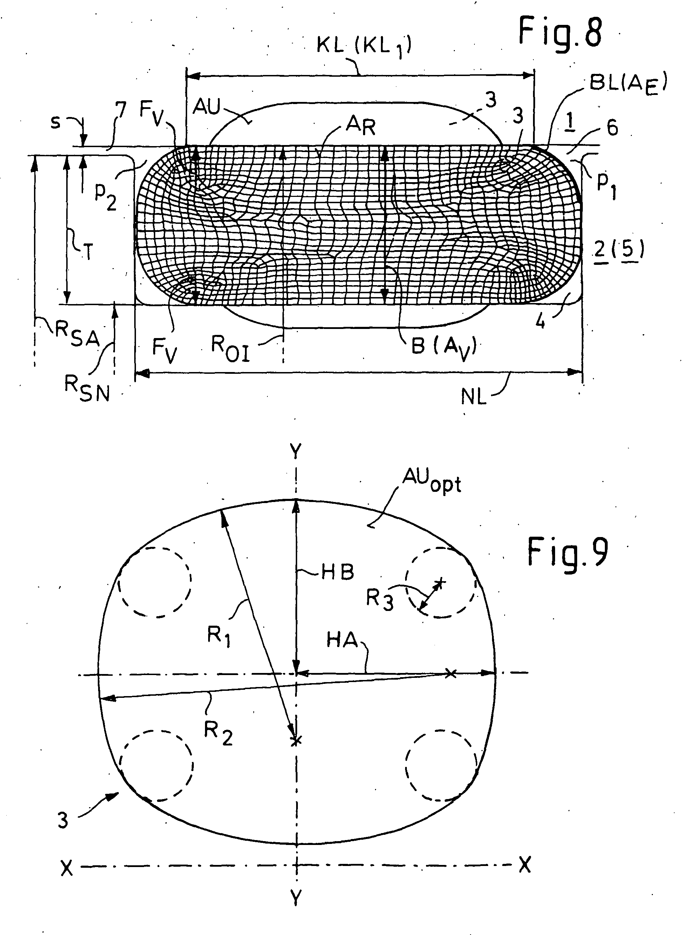

Ein die Permeation durch die Umfangsdichtung 3 bestimmendes Ftächen-Permeationslängen-Verhältnis $A_E$/KL wird durch eine permeationswirksame Teilürüfangsfläche $A_E$ der Umfangsdichtung 3 zu der Kontaktlänge KL gebildet. Die Teilumfangsfläche $A_E$ ist in der Nähe des Spaltes 7 angeordnet und wird durch die in Fig. 2 (und auch Fig. 8) fett hervorgehobene, insbesondere nicht an den Kupplungsteilen 1, 2 antiegende, Bogenlinie BL der verpreßten, radialen Querschnittsfläche $A_R$ der deformierten Umfangsdichtung 3 bestimmt. Erfindungsgemäß ist die Teilumfangsfläche $A_E$ nicht größer als der halbe Wert, vorzugsweise nicht größer als ein Fünftel der senkrecht zur axialen Richtung X-X verlaufenden Querschnittsfläche $A_V$ der deformierten Umfangsdichtung 3. Die Länge der Bogenlinie BL nimmt bei verschwindender Bogehkrümmung im Minimalfall den Wert der Spaltweite s an. In diesem Fall sind der Querschnitt der unverpreßten Umfangsdichtung 3, die Nuttiefe T und die Spaltweite s sowie die Nutlänge NL derart aufeinander abgestimmt, daß die permeationswirksame Teitumfangsfläche $A_E$ unabhängig von einer Schnurstärke der unverpreßten Umfangsdichtung 3 ist. Im Maximalfall sollte die Bogenlinie BL nicht länger sein als der halbe Wert, vorzugsweise ein Viertel des Wertes, der Breite B, d.h. der Summe aus Spaltweite s und Nuttiefe T.

Das Steckerteil ist in der in Fig. 1 dargestellten speziellen Ausführung eines erfindungsgemäßen Verbindungssystems in der Aufnahmeöffnung 6 mittels einer (als Ganzes nicht näher bezeichneten) Verriegelungseinrichtung im eingesteckten Zustand gegen Lösen arretierbar. Die Verriegelungseinrichtung besteht dabei aus mindestens einem Rastelement - in der dargestellten Ausführung aus zwei axial hintereinander auf dem Steckerteil angeordneten Rastelementen 8, 9 - und aus einer jeweils mit einem Rastelement 8, 9 zusammenwirkenden Rastschulter 10. Die Rastelemente 8, 9 sind jeweils durch einen in jeweils einer Ringnut 11, 12 des Steckerteiles gehaltenen Sprengring gebildet. Das Gehäuseteil ist zweiteilig ausgeführt, indem es aus einem inneren Gehäuseteil 1a, das den Hauptteil der Aufnahmeöffnung 6 bildet, und aus einem mit dem inneren Gehäuseteil 1a lösbar verbindbaren und das innere Gehäuseteil 1a im wesentlichen umfassenden äußeren Gehäuseteil 1b besteht. Die Rastschulter 10 ist einendig im Eingangsbereich der Aufnahmeöffnung 6 an dem äußeren Gehäuseteil 1b ausgebildet. Wie dargestellt, ist das äußere Gehäuseteil 1b als mit dem inneren Gehäuseteil 1a verschraubbare Überwurfmutter ausgebildet.

Das zweite: Kupplungsteil 2, also der Stecker, sowie sowohl das innere Gehäuseteil 1a, als auch das äußere Gehäuseteil 1b des ersten Kupplungsteiles 1 können bevorzugt aus metallischen Werkstoffen, insbesondere aus Aluminium- oder hochlegierten Edelstahllegierungen, bestehen. Die Umfangsdichtungen 3 können beispielsweise aus einer polymeren Fluor-Kohlenstoffverbindung, aus synthetischem Kautschuk, wie Silikonkautschuk, NBR oder H-NBR, PUR, EPDM, SBR, o.ä. bestehend

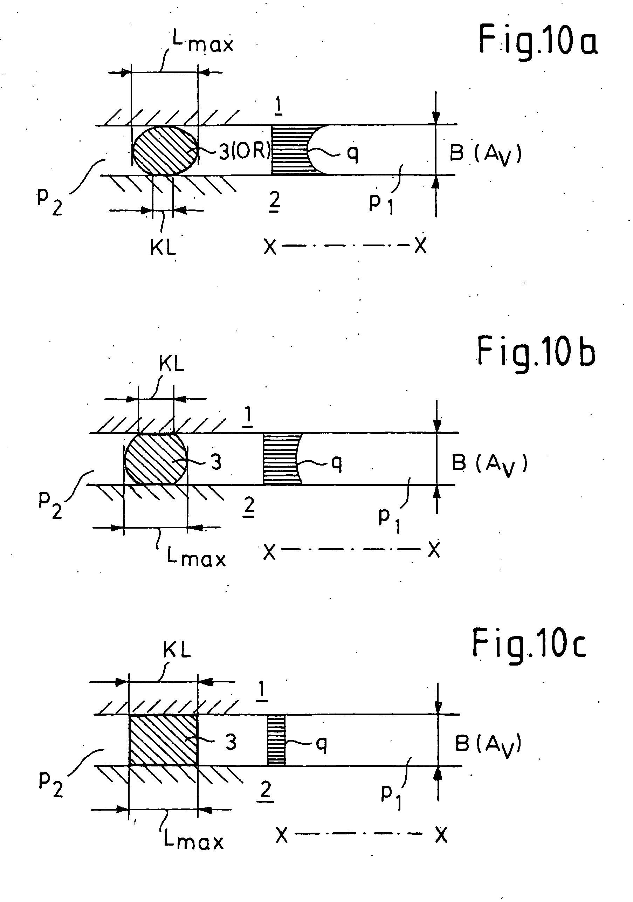

Hinsichtlich eines als Quotient aus einem in der Nut 4 liegenden Anteil des verpreßten, radialen Querschnitts $A_R$ der Umfangsdichtung 3 und der Querschnittsfläche $A_N=T*NL$ der Nut 4 berechneten Füllgrades FG der Nut 4 ist es zur Erzielung einer hohen Dichtungswirkung und damit Minimierung der Leckmenge Q von Vorteil, wenn dieser Füllgrad FG im Bereich von 58,0 Prozent bis 100,0 Prozent, vorzugsweise von 78,0 Prozent bis 98,0 Prozent, liegt. Unter Beachtung der möglichen Wärmeausdehnung den Umfangsdichtung sollte aber eine Extrusion in den Spalt 7 möglichst vermieden werden. Für eine Umfangsdichtung 3 mit der in Fig. 10a dargestellten Querschnittsform sollte der oben erwähnte Füllgrad FG der Nut 4 insbesondere größer sein als 78,0 Prozent. Bei asymmetrischer Lage der Umfangsdichtung 3 in der Nut 4 gilt das Gleiche für einen als Quotienten aus einem in einer Hälfte der Querschnittsfläche $A_N$ der Nut 4 liegenden - in Fig. 2 schraffiert dargestellten - vergleichsweise größeren Anteil $A_{RH}$ des verpreßten, radialen Querschnitts $A_R$ der Umfangsdichtung 3 und der halben Querschnittsfläche $A_N/2$ der Nut 4 berechneten Füllgrad FGH der Nut 4. Eine asymmetrische Lage der Umfangsdichtung 3 kann sich dabei dadurch einstellen, daß diese durch die Differenz $\Delta p$ zwischen dem erhöhten Druck $p_1$ und dem Vergleichsdruck $p_2$ in axialer Richtung X-X gegen eine Wand der Nut 4 gedrückt wird, während auf der anderen Seite der Nut 4 noch ein Abstand zwischen der Wand der Nut 4 und der Umfangsdichtung 3 besteht.

Die durch Fig. 2 veranschaulichten, jeweils zwischen der Umfangsdichtung 3 und dem jeweiligen Kupplungsteil 1, 2 auftretenden Kontaktverhältnisse lassen sich mit Hilfe der Hertz'schen Gleichungen beschreiben, wenn Umfangsdichtung 3 und Kupplungsteile 1, 2 als elastische Körper aufgefaßt werden. Auf Gestalt und Größe der Pressungsfläche (Abplattung), auf die gegenseitige Annäherung der Körper sowie auf die Größe und Verteilung der unter dem Einfluß der Vorspannkraft $F_V$ entstehenden Druckspannungen, z.B. auf die Berechnung der auftretenden Maximalspannungen, sind die Hertz'schen Gleichungen anwendbar. Diese Gleichungen sind elliptische Integrale erster Art und wurden unter Zugrundelegung der strengen Elastizitätstheorie bestimmt.

Für die Berechnung von Sonderfällen der Berührung bestimmter Körper mit konvex, eben oder konkav ausgebildeten Oberflächen, wie Kugel gegen Platte, Zylinder gegen Zylinder usw., wurden aus der Hertz'schen Theorie spezielle Berechnungsformeln abgeleitet, wobei im vorliegenden Fall, wenn man die Abwicklung der Umfangsdichtung 3 auf dem jeweiligen Kupplungsteil 1, 2 betrachtet, an der Berührungsstelle in erster Näherung von einem Kontakt Zylinder gegen Ebene ausgegangen werden kann. Der Zylinder ist dabei erfindungsgemäß die Abwicklung der Umfangsdichtung 3, und die Ebene ist die Abwicklung des jeweiligen Kupplungsteiles 1,2, also entweder die Innenmantelfläche der Aufnahmeöffnung 6 oder die Außenmantelfläche des Schaftes 5 auf dem Grund der Nut 4

Für eine unter Normalkraft $F_N$ entstehende maximale mechanische Spannung $\sigma_{max}$ beim Kontakt zwischen einem zylindrischen Körper mit dem Radius R, der über eine Länge $L_A$ an einem ebenen Körper (mit dem Radius Unendlich) anliegt, gilt nach Herz

$$\sigma_{max} = \sqrt{\frac{F_N}{2\pi L_A R \Theta}} \qquad (2)$$

wobei $\Theta$ eine aus den Elastizitätsmoduln der beiden Körper berechnete Größe ist, die sich entsprechend der Formel

$$\Theta = \frac{1-v_Z^2}{E_Z} + \frac{1-v_E^2}{E_E} \qquad (3)$$

ergibt, in der die Größen $V_Z$ und $V_E$ die jeweiligen Querkontraktionszahlen bzw. Poissonkonstanten und $E_Z$ und $E_E$ die jeweiligen Elastizitätsmoduln des zylindrischen und des ebenen Körpers sind.

Durch die in dem erfindungsgemäßen Verbindungssystem bei der Montage der Dichtung 3 auftretende radial gerichtete Vorpreßkraft $F_V$, die der Normalkraft $F_N$ in Gleichung (2) entspricht, wird die Dichtungskontur abgeplattet und es kommt zu einer linienförmigen Berührung über die Kontaktlänge KL. Dabei bildet sich beim Kontakt zwischen einer beispielsweise als O-Ring ausgebildeten Umfangsdichtung 3 und dem ersten Kupplungsteil 1 über eine Länge $L_1$, die in Gleichung (2) der Länge $L_A$ entspricht und die gleich dem Innenumfang $U_{OI} = 2 * \pi * R_{OI}$, des ersten Kupplungsteiles 1 ist, eine Kontaktfläche $F_1 = 2 * \pi * KL * R_{OI}$; aus

Geht man davon aus, daß die Umfangsdichtung 3 aus einem Elastomer und das erste Kupplungsteil 1 aus Metall besteht, so ist in Gleichung (3) der Summand, der sich auf den ebenen Körper bezieht, zu vernachlässigen, weil er aufgrund des bei Metallen sehr viel höheren Elastizitätsmoduls als bei Elastomeren sehr klein gegenüber dem Summanden ist, der sich auf den zylindrischen Körper bezieht. Des Weiteren kann für Elastomere in erster Näherung mit einer Querkontraktionszahl von 0,5 für die Größe $v_Z$ in Gleichung (3) gerechnet werden.

Für eine maximale mechanische Spannung $\sigma_{1max}$ beim Kontakt zwischen der Umfangsdichtung 3 und dem ersten Kupplungsteil 1 gilt demnach

$$\sigma_{1max} = 0,184 \sqrt{\frac{F_V E_D}{R_{OI} R_{RS}}} \qquad (4)$$

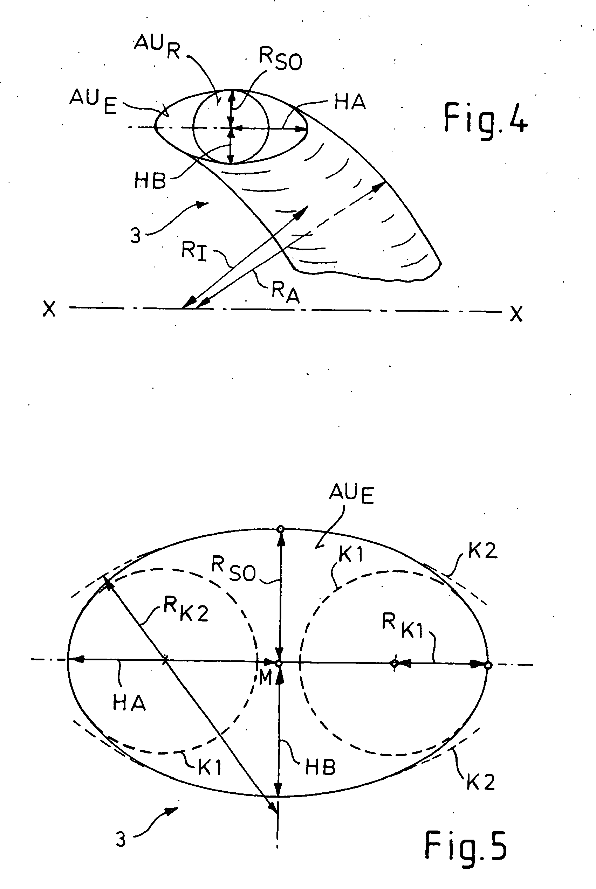

Dabei ist $F_V$ die in radialer Richtung wirkende Vorspannkraft, mit der die Dichtung 3, gegen das erste Kupplungsteil 1 gedrückt wird, und $R_{OI}$ der Innenradius des ersten Kupplungsteiles 1. $E_D$ ist der Wert des Elastizitätsmoduls der Umfangsdichtung 3. $R_{RS}$ ist ein Maß für die konvexe Krümmung der Dichtung 3 in radialer Richtung, z.B. der Schnurradius $R_{SO}$ einer O-Ringdichtung im unverpreßten Zustand , wie er in Fig. 4 und 5 angegeben ist. Die maximale mechanische Spannung $\sigma_{1max}$ ist nach Hertz 1,5 mal so groß wie der spezifische Wert der auf die sich ausbildende Kontaktfläche $F_1$ bezogenen Vorspannkraft $F_V$.

Die an der Berührungsstelle zwischen einem zylindrischen und einem ebenen Körper auftretende Abplattung AP, mit AP als der halben Kontaktbreite - im vorlegenden Fall der halben Kontaktlänge KL - kann in allgemeiner Form nach Hertz entsprechend der Gleichung

$$AP = 2 \sqrt{\frac{F_N \Theta R}{\pi L_A}} \qquad (5)$$

bestimmt werden.

Unter den oben genannten Randbedingungen ergibt sich von dieser Gleichung (5) ausgehend die Größe der Kontaktlänge KL, zwischen dem Innenrädius $R_{OI}$ des ersten Kupplungsteiles 1 und der Umfangsdichtung 3 zu

$$KL_1 = 0,78 \sqrt{\frac{F_V R_{RS}}{E_D R_{OI}}} \qquad (6)$$

Für den Kontakt zwischen der Umfangsdichtung 3 und dem zweiten Kupplungsteil 2 lassen sich - ein radial nach Innen und Außen symmetrisches Wirksamwerden der Vorspannkraft $F_V$ in der Umfangsdichtung 3 vorausgesetzt - die maximale mechanische Spannung $\sigma_{2max}$ und die Kontaktlänge $KL_2$ zwischen dem Radius $R_{SN}$ des Schaftes 5 auf dem Grund der Nut 4 und der Umfangsdichtung 3 bestimmen. In den Gleichungen (4) und (6) tritt dann an die Stelle des Innenradius $R_{OI}$ des ersten Kupplungsteiles 1 der - kleinere - Radius $R_{SN}$ des Schaftes 5 des zweiten Kupplungsteiles 2 auf dem Grund der Nut 4. Die Werte der maximalen mechanischen Spannung $\sigma_{2max}$ und der Kontaktlänge $KL = KL_2$ werden demnach größer ausfallen als die entsprechenden Werte $\sigma_{1max}$ und $KL = KL_1$. Für die erfindungsgemäße Ausbildung des Verbindungssystems ist in dem Verhältnis $A_E/KL$ der permeationsbestimmenden Teilumfangsfläche $A_E$ der deformierten Umfangsdichtung 3 zur Kontaktlänge KL hierbei der kleinere Wert $KL = KL_1$ zu berücksichtigen.

Gleichung (6) veranschaulicht auch, daß sich eine Vergrößerung der Kontaktlänge KL entweder durch eine Erhöhung der Vorspannkraft $F_V$ oder durch eine Vergrößerung des Krümmungsradius $R_{RS}$ im Querschnitt der nicht deformierten Umfangsdichtung 3 oder durch eine Verringerung des Elastizitätsmoduls $E_D$ des Dichtungsmaterials oder durch einen kleineren Innenradius $R_{OI}$ des ersten Kupplungsteiles 1 herbeiführen läßt.

Was die Erhöhung der Vorspannkraft $F_V$ betrifft, so muß dazu bemerkt werden, daß die Größe der Vorspannkraft $F_V$ bei einem Einstecken des Schaftes 5 mit der bereits in der Nut 4 angeordneten Umfangsdichtung 3 über die hier nur allgemein angeführte Beziehung $F_S = \mu * F_V$, mit $\mu$ als einer integral aufzufassenden Reibungszahl, die notwendigerweise aufzubringende Steckkraft $F_S$ gleichsinnig beeinflußt und daherallerdings in einer gemäß dem Durchmesser der Dichtung entsprechenden Abstufung - einen vorgegebenen Wert nicht überschreiten sollte. So rechnet man beispielsweise bekanntermaßen bei Nenndurchmessern von 12 mm mit geforderten Maximalsteckkräften $F_S$ von unter 50 N, vorzugsweise sogar von unter 10 N. Für größere Nenndurchmesser oder auch für kleine Nenndurchmesser, aber bei dem für $CO_2$ relevanten Druckbereich, treten größere Steckkräfte $F_S$ auf, die mehr als 100 N und 120 N erreichen können. Solche Steckkräfte $F_S$ können erfindungsgemäß vermieden und vorteilhafterweise für Innenradien $R_{OI}$ des ersten Kupplungsteiles 1 im Bereich von etwa 6 mm bis 13 mm Steckkräfte $F_S$ von weniger als 100 N, vorzugsweise weniger als 50 N und sogar von weniger als 30 N, erreicht werden.

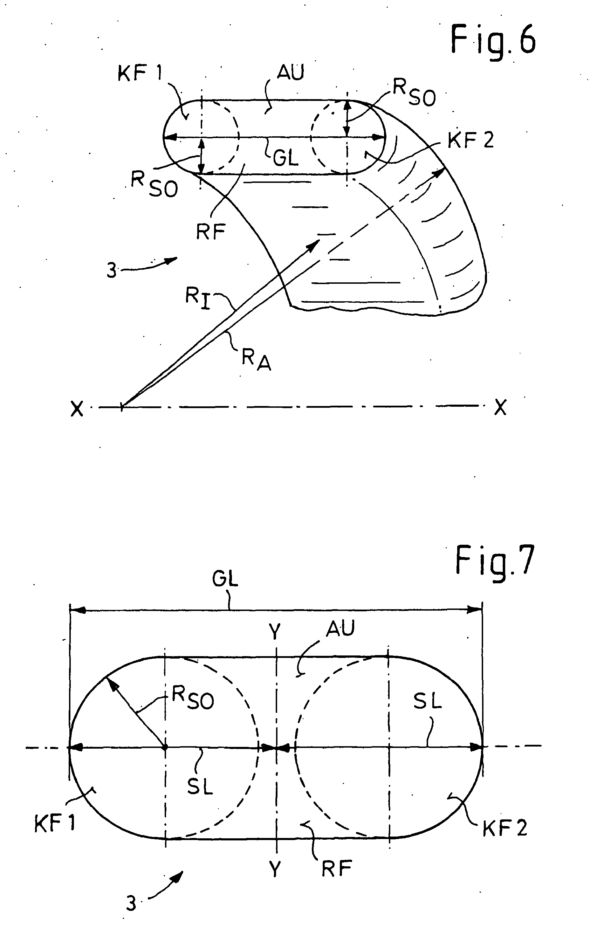

Erfindungsgemäß sind nun der Querschnitt $AU_R$, bzw. auch $AU_E$ in Fig. 4, AU in Fig. 6 bis 8 oder $AU_{opt}$ in Fig. 9, der unverpreßten Umfangsdichtung 3, die Nuttiefe T, die Nutlänge NL und die Spaltweite s speziell aufeinander abgestimmt, so daß bei der Montage nur geringe Steckkräfte $F_S$ auftreten und daß bei einer geringen Menge Q des durch die Umfangsdichtung 3 eines erfindungsgemäßen Verbindungssystems durchgesetzten Fluids unter hohen Systemdruckdifferenzen $\Delta p$, insbesondere unter Systemdrücken $p_1$ von bis zu mehr als 150 bar bzw. 180 bar, ein zuverlässiger Ausgleich der Fertigungstoleranzen der Kupplungsteile 1, 2 erfolgt. Die vorstehend beschriebenen Zusammenhänge, insbesondere die Gleichung (6), können bei dieser Abstimmung in bevorzugter Weise Berücksichtigung finden.

Die Art und Weise der erfindungsgemäßen Abstimmung von Querschnitt $AU_R$, $AU_E$, AU oder $AU_{opt}$ der unverpreßten Umfangsdichtung 3, Nuttiefe T, Nutlänge NL und Spaltweit s aufeinander veranschaulicht Fig. 3, in der - wie bereits erwähnt - ein Diagramm dargestellt ist, das die Abhängigkeit der Menge Q eines Fluids, weiches infolge von Permeation durch eine mit Fluid gesättigte bekannte Umfangsdichtung oder erfindungsgemäße Umfangsdichtung 3 eines Verbindungssystems mit gaspermeabler Umfangsdichtung durchgesetzt wird, von einem Verhältnis A/L einer Permeationsfläche A der deformierten Umfangsdichtung zu einer Permeationslänge L durch die Umfangsdichtung wiedergibt.

Der mit I bezeichnete Bereich im rechten Teil des Diagramms veranschaulicht dabei die Verhältnisse bei der herkömmlich eingesetzten, mit Hilfe der eingangs erläuterten Gleichung (1) dimensionierten Umfangsdichtung, wobei - wie beschrieben - von einer linearen, proportionalen Abhängigkeit der Leckmenge Q von der senkrecht zur axialen Richtung X-X orientierten Querschnittsfläche A der verpreßten Dichtung und einer linearen, proportionalen Abhängigkeit vom Kehrwert der Permeationslänge L ausgegangen wird. Was die senkrecht zur axialen Richtung X-X verlaufende Querschnittsfläche A der deformierten Umfangsdichtung betrifft, so ergibt sich diese aus einer Querschnittsfläche $A_V$, wie sie unter Bezugnahme auf Fig. 2 vorstehend beschrieben ist.

Bei einer erfindungsgemäß eingesetzten Umfangsdichtung 3, die - wie-beispielhäft in Fig. 2 dargestellt - in axialer Richtung X-X konvex aufgewölbt ist, oder bei einer Umfangsdichtung 3, die - wie in Fig. 10c dargestellt - in axialer Richtung X-X gar nicht gewölbt ist, ist die kürzeste - und daher für die Permeation entscheidende - Permeationslänge L die senkrecht zum jeweiligen Radius $R_{SA}$, $R_{OI}$ der Kupplungsteile 1, 2 in axialer Richtung X-X verlaufende Kontaktlänge KL.

Gemäß der Erfindung wird nun bei dem Verhältnis A/L von einem, die Permeation durch die Umfangsdichtung 3 bestimmenden Verhältnis $A_E$/KL der permeationswirksamen Teilumfangsfläche $A_E$ der Umfangsdichtung 3 zu der Kontaktlänge KL ausgegangen wobei in dem Verhältnis $A_E$/KL die Teilumfangsfläche $A_E$ nicht größer ist als der halbe Wert der senkrecht zur axialen Richtung X-X verlaufenden Querschnittsfläche $A_V$ der deformierten Umfangsdichtung 3. Dies ist im linken Teil des Diagramms, in einem Bereich, der in Fig. 3 mit II bezeichnet ist, veranschaulicht. In diesem Bereich II liegt die Menge Q des infolge von Permeation durch die Umfangsdichtung 3 durchgesetzten Fluids nach Eintritt der Sättigung der Umfangsdichtung 3 mit Fluid bedeutend niedriger als entsprechend der herkömmlichen Dimensionierungsmethode (veranschaulicht durch die in Strichlinie ausgeführte Weiterführung der Gerade aus Bereich I) zu erwarten wäre.

Der aus Fig. 3 entnehmbare Wert $Q_1$ stellt eine Leckmenge Q von 5 bis 9 g pro Jahr und Verbindung dar, wie sie charakteristisch für den Einsatz des Käitemitteis R134a in einer Kraftfahrzeug-Klimaanlage ist. Bei Vorgabe eines solchen, bisher tolerierten Wertes $Q_1$, einer bestimmten Betriebsdauer t, dem Betriebsdruck $p_1$ (z.-B. 30 bar) gelangt man unter Berücksichtigung der Gleichung (1) für ein bestimmtes Material, d.h. unter Zugrundelegung einer bestimmten Permeationskonstante P, zu einem Verhältnis $(A/L)_{11}$, mit dessen Einstellung den bisherigen technischen Forderungen Rechnung getragen werden kann.

Bei Vorgabe eines niedrigeren Wertes $Q_2$ als des bisher tolerierten Wertes $Q_1$, wie beispielsweise 2,5 oder 1 g pro Jahr und Verbindung, wie er für den Einsatz von $CO_2$ als Kältemittel in einer Kraftfahrzeug-Klimaanlage angestrebt wird, sowie bei Vorgabe der weiteren Größen - der Betriebsdauer t, dem Betriebsdruck $p_1$ (beispielsweise 180 bar), bzw. der Druckdifferenz $\Delta p$, und der Permeationskonstante P - getaugt man unter Berücksichtigung der Gleichung (1) zu einem Verhältnis $(A/L)_{12}$. In der Praxis hat sich aber gezeigt, daß mit der Einstellung dieses Verhältnisses $(A/L)_{12}$

den erhöhten technischen Forderungen nicht mehr Rechnung getragen werden kann. Der geforderte niedrige Wert $Q_2$ der Leckmenge Q kann dann nur durch Maßnahmen, wie z.B. eine übermäßig lange Nut- und Dichtungslänge, erreicht werden, die außerordentlich hohe Steckkräfte $F_S$ verursachen und konstruktiv nicht durchsetzbar sind.

Die Erfindung ermöglicht im Gegensatz dazu bei niedrigen Montagekräften $F_S$ die Einstellung eines Verhältnisses $A_E/KL$, das den technischen Forderungen - auch bei Vorgabe eines sehr niedrigen Leckmengenwertes $Q_2$, wie er für den Einsatz von $CO_2$ als Kältemittel in einer Kraftfahrzeug-Klimaanlage gefordert wird - gerecht wird.

Um möglichst geringe Werte $Q_2$ der Leckmenge Q zu erzielen, kann das Verhältnis $A_E/KL$ vorzugsweise unterhalb des in Fig. 3 dargestellten Grenzwertes G liegen.

Dieser Grenzwert G, d.h. das die Permeation durch die Umfangsdichtung 3 bestimmende Verhältnis $A_E/KL$, sollte, insbesondere für Kohlendioxid als Fluid, bei Raumtemperatur nicht größer sein als 50,0 mm, vorzugsweise nicht größer als 17,5 mm, bei 100 °C nicht größer als 4,5 mm, vorzugsweise nicht größer als 1,2 mm, und bei 150 °C nicht größer als 1,00 mm, vorzugsweise nicht größer als 0,25 mm.

Im Folgenden wird unter Bezugnahme auf Fig. 4 und 5 gezeigt, wie dadurch, daß der Querschnitt $AU_E$ der Umfangsdichtung 3 bereits im unverpreßten Zustand eine elliptische Form aufweist, im Vergleich zu einem O-Ring eine Vergrößerung der Kontaktlänge KL herbeigeführt werden kann.

Wie bereits erwähnt, ist $R_{RS}$ ein Maß für die konvexe Krümmung der Umfangsdichtung 3 und wird bei einem O-Ring, wie er als Kern in Fig. 4 dargestellt ist, durch den Schnurradius $R_{SO}$ des kreisförmigen Querschnitts $AU_R$ der Schnur bestimmt. Bei einer Umfangsdichtung 3, die eine Ellipse, wie sie den kreisförmigen Querschnitt in Fig. 5 $AU_R$ umschreibt, als Form des Querschnitts $AU_E$ aufweist, liegt im Gegensatz dazu über ihren Querschnittsumfang keine einheitliche Krümmung vor, da an die Stelle des einheitlichen Krümmungsradius $R_{SO}$ des Kreises eine lange Hatbächse HA und eine kurze Halbachse HB treten.

Es ist nun möglich, diese Halbachsen HA, HB im Sinne einer Koordinatentransformation in Bezug auf den genannten Kreisradius $R_{SO}$ durch die Beziehungen $HA=U*R_{SO}$ und $HB=V*R_{SO}$ auszudrücken. Für die in Fig. 4 dargestellten Verhältnisse gilt dabei für die Transformationsfaktoren U, V beispielsweise U = 2 und V=1, d.h. $HB=R_{SO}$, wobei der innere Radius $R_I$ und der äußere Radius $R_A$ des jeweiligen Ringes der beiden ineinander projizierten Ausführungsformen der Umfangsdichtung 3 für beide Ausführungen einheitlich sind.

Des Weiteren ist es in einer hinreichend genauen Näherungskonstruktion für die Ellipse möglich, Scheitelkrümmungskreise K1, K2 einzuführen, die sich ihr in der Umgebung der Scheitel weitestgehend anschmiegen, wie dies Fig. 5 zeigt. Hierbei läßt sich zeigen, daß sich die Radien $R_{K1}$ und $R_{K2}$ der Scheitelkrümmungskreise K1, K2 nach den Beziehungen

$$R_{K1} = \frac{V^2}{U} R_{SO} \qquad (7)$$

und

$$R_{K2} = \frac{U^2}{V} R_{SO} \qquad (8)$$

berechnen lassen

Für den dargestellten Fall ergibt sich damit für den im Hinblick auf die Ausbildung des erfindungsgemäßen Verbindungssystems bedeutsamen Radius $R_{K2}$, daß dieser den vierfachen Wert des Radius $R_{SO}$ des in die Ellipse einbeschriebenen Kreises annimmt. Berücksichtigt man diesen Wert $R_{K2}$ als Krümmungsmaß $R_{RS}$ in der Gleichung (6), so bedeutet dies, daß sich bei gleichbleibender Vorpreßkraft $F_V$ die Kontaktlänge KL verdoppelt oder daß bei gleichbleibender Kontaktlänge KL die Vorpreßkraft $F_V$ und damit die notwendige Steckkraft $F_S$ auf bis zu ein Viertel gesenkt werden kann.

Sowohl zur Erzielung eines günstigen Verhältnisses $A_V/KL$ der senkrecht zur axialen Richtung X-X verlaufenden Querschnittsfläche $A_V$ der deformierten Umfangsdichtung 3 zur Kontaktlänge KL, als auch zur Erzielung eines günstigen Verhältnisses $A_E/KL$ der permeationsbestimmenden Teilumfangsfläche $A_E$ zur Kontaktlänge KL ist es somit von Vorteil, wenn der Querschnitt $AU_E$ der Umfangsdichtung 3 im unverpreßten Zustand bereits eine Vorform aufweist, bei der eine Formzahl, ein Quotient $FZ_U=HA/HB$ aus einer axialen Haupterstreckung des Dichtungsquerschnitts $AU_E$, im dargestellten Fall der großen Halbachse HA der Ellipse, und einer radialen Haupterstreckung, im dargestellten Fall der kleinen Halbachse HB, der Ellipse, einen Wert von größer 1, vorzugsweise von größer 2, aufweist.

Dies ist auch bei den in Fig. 6 bis 8 dargestellten weiteren Ausführungsformen einer Umfangsdichtung 3 für ein erfindungsgemäßes Verbindungssystem der Fall. Für diese Ausführungsformen ist es charakteristisch, daß sich der Querschnitt AU der unverpreßten Umfangsdichtung 3 in symmetrischer Weise zu einer Mittenachse Y-Y aus zwei gleichgroßen Halbkreisflächen KF1, KF2 - es könnten auch Kreissegment-Flächen sein und einer dazwischenliegenden Rechteckfläche RF zusammensetzt.

Wie in Fig. 4 ist in Fig. 6 und 7 - im Gegensatz zu Fig. 4 aber zweimal- ein O-Ring in die als weitere Ausführung dargestellte Querschnittsform einbeschrieben. Der O-Ring bestimmt mit dem Radius $R_{SO}$ die radiale Haupterstreckung HB des Querschnitts AU der Schnur und die Krümmung in axialer Richtung X-X. Die axiale Haupterstreckung HA ergibt sich als Seitenlänge SL der Halbfläche des Querschnitts AU, der die axiale Gesamtlänge GL aufweist. Die Wahl dieser Gesamtlänge GL - beispielsweise im Verhältnis zu einer vorgegebenen Nutlänge NL - stellt neben der Größe der radialen Deformation der Umfangsdichtung 3 bei der Montage eine weitere Möglichkeit dar, um im verpreßten Zustand den Füllungsgrad FG der Nut 4 zu variieren.

Wie bei der Umfangsdichtung 3 mit dem elliptischen Querschnitt (Fig. 4 und 5) liegt auch gemäß Fig. 6 bis 8 über den Querschnittsumfang hinweg keine einheitliche Krümmung vor. So ist die in radialer Richtung ausgebildete Krümmung durch die Rechteckfläche RF mit der Seitenlänge $GL-2*R_{SO}$ bestimmt; und ein entsprechender Krümmungsradius nimmt den Wert Unendlich an. Fig. 8 zeigt in ähnlicher Form wie in Fig. 2 die netzartig gefüllt dargestellte, verpreßte Umfangsdichtung 3 im Vergleich zur unverpreßten Umfangsdichtung 3. Der Darstellung ist dabei zu entnehmen, daß ein hoher Füllungsgrad FG der Nut vorliegt und daß die Länge der Bogenlinie BL nicht größer ist als der halbe Wert der Summe aus Spaltweite s und Nuttiefe T.

Fig. 9 zeigt eine weitere, als optimal zu betrachtende Ausführung einer Umfangsdichtung 3 für ein erfindungsgemäßes Verbindungssystem, die sich dadurch auszeichnet, daß der Querschnitt $AU_{opt}$ der unverpreßten Umfangsdichtung 3 in der Grundgestalt aus einem Rechteck besteht, das zwei mit einem ersten Krümmungsradius $R_1$ konvex gewölbte Längsseiten, zwei mit einem zweiten Krümmungsradius $R_2$ konvex gewölbte Querseiten und vier mit einem dritten Krümmungsradius $R_3$ konvex verrundete Ecken aufweist. Der dritte, insbesondere bei der Verpressung der Umfangsdichtung die Bogenlänge BL bestimmende und den Füllungsgrad FG beeinflussende, Krümmungsradius $R_3$ ist dabei kleiner als der erste, insbesondere die Kontaktlänge KL bestimmende, Krümmungsradius $R_1$ und der erste Krümmungsradius $R_1$ ist wiederum kleiner als der zweite Krümmungsradius $R_2$, der ebenfalls Bogenlänge BL und Füllungsgrad FG - jedoch in geringerem Maß als der dritte Radius $R_3$- mitbestimmt. Durch eine solche Querschnittsform kann bei einem hohen Füllgrad FG der Nut 4 und niedriger Vorpreßkraft $F_v$ eine kurze Bogenlänge BL und damit eine im Vergleich mit einem O-Ring oder einem Ring mit elliptischen Querschnitt kleinere permeationswirksame Teilumfangsfläche $A_E$ erzielt werden. Auch bei dieser Ausführung weist der Querschnitt $AU_{opt}$ der Umfangsdichtung 3 im unverpreßten Zustand bereits eine Vorform auf, bei der die Formzahl, der Quotient $FZ_U=HA/HB$ aus einer axialen Haupterstreckung HA des Dichtungsquerschnitts $AU_{opt}$, und einer radialen Haupterstreckung HB einen Wert von größer 1, vorzugsweise von größer 2, aufweist.

Fig. 10a bis 10c zeigen, daß sich je nach Ausführungsform der Umfangsdichtung 3 für eine spezifischen Leckmenge q, d.h für auf eine auf den Querschnitt $A_v$ der verpreßten Umfangsdichtung 3 bezogene Leckmenge Q des infolge von Permeation durch die jeweilige: Umfangsdichtung 3 durchgesetzten Fluids, ein unterschiedliches Profil des Verlaufs der spezifischen Leckmenge q einstellt, das von der Form des Querschnitts $A_v$ der verpreßten Umfangsdichtung 3 abhängig ist.

Fig. 10a zeigt dabei einen verpreßten O-Ring OR. Ein solcher O-Ring OR bildet bei einem Verhältnis von Innendurchmesser $2*R_I$ zur Stärke seiner Schnur $2*R_{SO}$ von $\leq 6$, vorzugsweise von $< 3$, und einer starken minimalen Verpressung VP, d.h. bei einem Wert $VP=100\% * (1-B/(2*R_{SO}))$ von mehr als 15 Prozent, vorzugsweise von mehr als 25 Prozent bis zu maximal 40 Prozent, im montierten Zustand ein sehr viel stärke ausgeprägtes Oval als ein Standard O-Ring unter normaler Verpressung VP aus. Das bedeutet, daß der Querschnitt $AU_R$ des unverpreßten O-Rings OR, die Nuttiefe T und die Spaltweite s derart aufeinander abgestimmt sind, daß sich eine Kontaktlänge KL einstellt, die geeignet ist, einen optimalen Wert des Verhältnisses $A_E/KL$, d.h. unterhalb des Grenzwerts G in Fig. 3, also im Bereich II, einzustellen.

Fig. 10b zeigt eine Umfangsdichtung 3 mit einer - bereits durch die geometrische Gestaltung ihres Querschnitts im unverpreßten Zustand - gegenüber einem O-Ring OR verlängerten Kontaktlänge KL. Bei einer derartigen Umfangsdichtung 3, die - wie auch die Ausführung gemäß Fig. 4 und 5 mit dem elliptischen Querschnitt $AU_E$ und die Ausführungen gemäß Fig. 6 bis 8 sowie 9 - im montierten Zustand nicht stärker verpreßt werden muß als ein Standard-O-Ring, können die Montagekräfte und auch die bei der Montage notwendige Aufweitung gering gehalten werden. Auch ist die Gefahr, die Umfangsdichtung 3 bei der Montage zu beschädigen oder aus der Nut 4 herauszureißen, geringer als bei dem O-Ring OR mit kreisförmigem Querschnitt.

Fig. 10c zeigt eine Umfangsdichtung 3 mit im verpreßten Zustand rechteckiger Fläche des Querschnitts $A_V$. Die in axialer Richtung X-X liegenden Rechteckseiten sind dabei länger als die in radialer Richtung liegenden Rechteckseiten. Wird eine solche Umfangsdichtung in eine Nut eingebracht, so ist die permeationswirksame Teilumfangsfläche $A_E$ unabhängig von der Schnurstärke der unverpreßten Umfangsdichtung und die Bogenlinie BL nimmt den Wert der Spaltweite s an.

Bei allen Ausführungsformen der Umfangsdichtung 3 ist die kürzeste Permeationslänge L die Kontaktlänge KL, über die die Umfangsdichtung 3 an dem jeweiligen Kupplungsteil 1, 2 anliegt. Die jeweils größte Permeationslänge. L ist in Fig. 10a bis 10c mit $L_{max}$ bezeichnet. Aus den Profilen der spezifischen Leckmenge q wird dabei deutlich, daß durch eine Verlängerung der Kontaktlänge KL der Permeationsweg L und somit die Gesamt-Leckmenge Q, die sich durch Integration der spezifischen Leckmenge q über den Querschnitt $A_V$ als die in den Figuren dargestellte Fläche unter der Kurve q ergibt, verringert werden kann.

Der Unterschied zwischen der jeweils größten Permeationslänge $L_{max}$ der Kontaktlänge KL nimmt ausgehend von Fig. 10a bis zu Fig. 10c ab. Bei der in Fig. 10c dargestellten Ausführung der Umfangsdichtung 3, die unter dem Aspekt einer geringen Leckmenge Q als die optimale anzusehen ist, ist die größte Permeationslänge $L_{max}$ identisch mit der Kontaktlänge KL. Die in Fig. 10c gezeigte Form, insbesondere ein Rechteck als verpreßter, radialer Querschnitt $A_R$, das in der axialen Richtung X-X eine größere Seitenlänge aufweist als in radialer Richtung, erscheint daher als besonders vorteilhaft. Bei den in Fig.10b und 10c gezeigten Ausführungen ist auch davon auszugehen, daß der Querschnitt der Umfangsdichtung 3 im unverpreßten Zustand analog zum Querschnitt $AU_E$ in der Ausführung gemäß Fig. 4 und 5, analog zum Querschnitt AU in den Ausführungen gemäß Fig. 6 und 7 und analog zum Querschnitt $AU_{opt}$ in der Ausführung gemäß Fig. 9 - bereits eine Vorform aufweist, bei der der Quotient $FZ_U$=HA/HB aus einer axialen Haupterstreckung des Dichtungsquerschnitts und einer radialen Haupterstreckung einen Wert von größer 1, vorzugsweise von größer 2, aufweist. Allerdings muß erwähnt werden, daß sich die Verhältnisse bei der Montage, insbesondere die Verpressung, die Füllung der Nut 4 und die Größe der Montagekräft $F_S$ zum Teil - wie bei der rein rechteckigen Form - ungünstiger gestalten können als bei einem anderen Querschnitt.

So wurde einerseits bei Steckkräften $F_S$ von etwa 120 N ein Wert $Q_2$ der Menge Q des infolge von Permeation durch die Umfangsdichtung 3 durchgesetzten Fluids von weniger als 2,5 g pro Jahr und Verbindung, insbesondere von weniger als 1 pro Jahr und Verbindung von einem aus H-NBR bestehenden O-Ring 8,0 x 5,0 bei einer mittleren Verpressung VP von 25,0 Prozent erreicht, wobei letztere im Bereich von 21,2 Prozent bis 27,4 Prozent toleranzbedingt schwanken konnte. Der mittlere Füllgrad FG der Nut 4 lag dabei bei 86,0 Prozent und konnte im Bereich von 78,2 Prozent bis 92,1 Prozent schwanken. Die axiale Länge NL der Nut 4 lag bei 5,8 mm, die Tiefe T der Nut 4 im Bereich von 3,47 mm bis 3,63 mm, die Spaltweite s lag im Bereich von 0,05 mm bis 0,25 mm, der Innenradius $R_{OI}$ der Aufnahmeöffnung 6 lag bei 7,75 mm, der Radius $R_{SN}$ des Schaftes 5 auf dem Grund der Nut 4 bei 4,0 mm und der Radius $R_{SO}$ der Schnur des Querschnitts $AU_R$ im unverpreßten Zustand bei 2,5 mm. Es bildete sich bei Raumtemperatur eine Kontaktlänge KL von etwa 4,5 mm aus.

Andererseits wurde bei demgegenüber stark verringerten Steckkräften $F_S$ (weniger als 60 N) ein ebensolch geringer Wert $Q_2$ der Leckmenge Q von einem ebenfalls aus H-NBR bestehenden Oval-Ring bei einer mittleren Verpressung VP von 22,5 Prozent erreicht, wobei letztere im Bereich von 16,3 Prozent bis 26,8 Prozent toleranzbedingt schwanken konnte. Der Ring besaß im unverpreßten Zustand eine Querschnittsform, wie sie in Fig. 6 bis 8 dargestellt ist, wobei die axiale Gesamtlänge GL des Querschnitts AU bei 3,55 mm und der Radius $R_{SO}$ bei 1,25 mm lag. Der mittlere Füllgrad FG der Nut 4 lag im Bereich von 58,6 Prozent bis 90,0 Prozent. Die axiale Länge NL der Nut 4 lag bei 4,9 mm, die Tiefe T der Nut 4 im Bereich von 3,47 mm bis 3,63 mm, die Spaltweite s lag im Bereich von 0,05 mm bis 0,25 mm, der Innenradius $R_{OI}$ der Aufnahmeöffnung 6 lag bei 6,2 mm, und der Radius $R_{SN}$ des Schaftes 5 auf dem Grund der Nut 4 bei 4,35 mm. Es bildete sich bei Raumtemperatur eine Kontaktlänge KL von etwa 3,9 mm aus.

Zwar ist in den Darstellungen in Fig. 10a bis 10c keine Nut 4 dargestellt, jedoch gelten die entsprechenden Verhältnisse für die Kontaktlänge auch bei Vorhandensein einer Nut. Außerdem läßt sich daraus ableiten, daß ein erfindungsgemäßes Verbindungssystem dann eine besonders günstige Ausbildung besitzt, wenn sich im radialen Querschnitt $A_R$ der deformierten Umfangsdichtung 3 die Kontaktlänge KL um weniger als etwa 15 Prozent, vorzugsweise um weniger als etwa 10 Prozent, besonders bevorzugt um weniger als etwa 5 Prozent, von der maximalen axialen Permeationslänge $L_{max}$ durch die Umfangsdichtung 3 unterscheidet, d.h. wenn z.B. die Dichtung 3 in axialer Richtung einen sehr großen Krümmungsradius, wie den Radius $R_2$ in Fig. 9, aufweist Dies ist auch bei der Dimensionierung eines im unverpreßten Zustand elliptischen Querschnitts $AU_E$ bei der Festlegung der Länge der Halbachsen HA, HB - und unter Beachtung der Koordinatentransformation bei der Festlegung der Koeffizienten U und V - zu beachten.

Für ein erfindungsgemäßes Verbindungssystem ist es des Weiteren von Bedeutung, daß sich ein darin auftretender Gas-Leckagestrom GLS immer additiv aus zwei Komponenten zusammensetzt. Einerseits ist dies die Menge Q des infolge von Permeation durch die Umfangsdichtung 3 durchgesetzten Fluids, andererseits besteht über dies Kontaktlänge KL hinweg ein möglicher Weg für Mikroleckage-Ströme MQ, deren Größen durch die Topographie der Oberflächen der Kupplungsteile 1, 2 bestimmt wird. Eine vorteilhafte hohe Abdichtung gegen die Mikroteckage-Ströme MQ kann bei dem erfindungsgemäßen Verbindungssystem dadurch erreicht werden, daß ein maximaler Rauheitswert $R_{max}$ der Oberflächen der Kupplungsteile 1, 2, zumindest im Bereich des Außenradius $R_{SA}$ des Schaftes 5 und des Innenradius $R_{OI}$ der Aufnahmeöffnung 6, wo die Umfangsdichtung 3 anliegt, kleiner ist als 16 $\mu$m, vorzugsweise kleiner als 10 $\mu$m. Insbesondere sollte eine mittlere Rauheit $R_a$ im Bereich von 0,3 bis 0,8 $\mu$m liegen, was vorteilhafterweise bei Durchmessern von 12 bis 25 mm dadurch erreicht werden kann, daß die mit einem Aufmaß von 0,018 bis 0,040 mm versehenen Flächen, die im vorbearbeiteten Zustand eine Rauheit $R_a$ im Bereich von 1,6 bis 3,2 $\mu$m aufweisen sollten, glattgewalzt werden. Durch das Glattwalzen kann auch eine optimale Ausbildung des Tragprofils der in Kontakt mit der Umfangsdichtung stehenden Oberflächen der beiden Kupplungsteile 1, 2 erreicht werden. Die Mikroleckage-Ströme MQ sind dann im Gasleckage-Strom GLS sehr, insbesondere vernachlässigbar, klein gegenüber der Menge Q des infolge von Permeation durch die Umfangsdichtung 3 durchgesetzten Fluids.

Eine vorteilhafte Dichtungsanordnung ergibt sich in einem erfindungsgemäßen Verbindungssystem auch durch das axiale Hintereinanderschalten mehrerer Umfangsdichtungen 3, wie dies für zwei Umfangsdichtungen 3 in Fig. 1 gezeigt ist, da dadurch die Kontaktlänge KL verlängert wird. Zwar ist zum Erreichen des größeren Permeationsweges-der summarischen Kontaktlänge KL - der Aufwand dabei höher äls beim Einsatz nur eines O-Rings, dessen unverpreßter Querschnitt $AU_E$ z.B. elliptisch vorgeformt ist, eine solche Anordnung kann aber auch unter anderem Aspekt trotzdem von Vorteil sein. So wird beispielsweise mit der unter Sauerstoffeinfluß vor sich gehenden Alterung von EPDM als Dichtungswerkstoff der Permeabonsicoeffizient P deutlich niedriger. Dies könnte beispielsweise in einer Hintereinanderschaltung von Umfangsdichtungen 3 ausgenutzt werden, indem eine der Umgebungsatmosphäre zugangliche äußere Umfangsdichtung 3 nach einer gewissen Betnebsdauer-tattersbedingt einen verringerten Permeabilitätskoeffizienten P aufweist und die innere Umfangsdichtung 3 mit einem höheren Permeabilitätskoeffizienten P vor den Umgebungseinflüssen, die auch zu einer unerwünschten Versprödung des Dichtungsmaterials führen können, besser geschützt ist.

Die Erfindung ist nicht auf die dargestellten Ausführungsbeispiele beschränkt, sondern umfäßt auch alle im Rahmen der Ansprüche liegenden Ausführungen. So ist es zum Beispiel möglich, die erfindungsgemäße Verbindungsart nicht nur - wie dargestellt - in einer Steckkupplung, sondern auch in Systemen mit Block- oder Schraubverbindungen einzusetzen. Des Weiteren ist es möglich, daß nur das erste Kupplungsteil 1 anstelle des zweiten Kupplungsteiles 2 die Nut 4 aufweist. Verschiedene konstruktive Details können anders als dargestellt ausgeführt werden. So könnte z.B. in der Ausführung gemäß Fig. 9 der erste Radius $R_1$ größer als der zweite Radius $R_2$ gewählt werden.

Die in den Fig. 4 bis 9 dargestellten Ausführungen der Umfangsdichtung 3 mit den vorstehend beschriebenen Merkmalen besitzen eine eigenständige erfinderische Bedeutung. Schließlich können auch weitere Kriterien zu der erfindungsgemäßen Abstimmung bei der Festlegung des Querschnitts $AU_R$, $AU_E$, AU, $AU_{opt}$ der unverpreßten Umfangsdichtung 3, der Nuttiefe T, Nutlänge NL und der Spaltweite s hinzutreten, wie beispielsweise die bekanntermaßen anhand von Nomogrammen, die für bestimmte Werkstoffhärten des Materials der Umfangsdichtungen 3 einen Zusammenhang zwischen Spaltweite s und Betriebsdruck $p_1$ enthalten, vorgenommene Dimensionierung. Hierbei ist im Hinblick auf Gleichung (6) insbesondere auf eine mögliche Körrelation zwischen dem Elastizitätsmodul $E_D$ und der Shore-A-Härte des Materials zu achten. Als günstig hat sich eine Shore-A-Härte im Bereich von 70 bis 90 erwiesen.

Die in den Gleichungen (4) und (6) angegebenen, vor dem jeweiligen Wurzelausdruck stehenden, theoretisch bestimmten Koeffizienten 0,184 und 0,78 können von in der Praxis auftretenden Werten abweichen, da die ihnen zugrundeliegenden Voraussetzungen nur näherungsweise erfüllt sind. Die konkret angegebenen Werte können daher in allgemeiner Form durch jeweils zu ermittelnde Konstanten C1 und C2 ausgedrückt werden.

Auch auf die Verpressung VP, in die - wie gezeigt wurde - die Breite B rechnerisch eingeht, die sich wiederum aus dem Verhältnis der Summe aus Nuttiefe T und Spaltweite s zu der radialen Haupterstreckung der Umfangsdichtung 3, wie der kleinen Halbachse HB der Ellipse oder dem Radius $R_{SO}$ des Kreises, ergibt, können die Hertz'schen Gleichungen - und zwar insbesondere die Gleichung für die Annäherung zweier aufeinandergepreßter elastischer Körper - mit Vorteil Anwendung finden.

Zur Verringerung der Permeation kann eine Umfangsdichtung 3 eines erfindungsgemäßen Verbindungssystems zusätzlich mit einer speziellen Gasbarrieren-Beschichtung versehen sein, beispielsweise einer Beschichtung mit Gleitlack auf Polyurethanbasis oder mit einer durch Spraycoating aufgetragenen permeationsmindernden Beschichtung, in einem bevorzugten Dickenbereich von 15 $\mu$m bis 60 $\mu$m, insbesondere bei einer Rundumbeschichtung von O-Ringen in einem Dickenbereich von 20 $\mu$m bis 30 $\mu$m.

**Bezugszeichen**

1 erstes Kupplungsteil (Gehäuseteil)
1 a inneres Gehäuseteil
1b äußeres Gehäuseteil
2 zweites Kupplungsteil (Steckerteil)
3 Umfangsdichtung,
4 Nut für 3-in 5
5 Schaft von 2
6 Aufnahmeöffnung von 1
7 Spalt zwischen 1 und 2

| | | |
|---|---|---|
| 8, 9 | Rastelemente | |
| 10 | Rastschulter | |
| 11, 12 | Ringnuten für 8,9 | |

| | | |
|---|---|---|
| I | linearer Bereich der Abhängigkeit Q von A/L | |
| II | nichtlinearer Bereich der Abhängigkeit Q von A/L | |

| | |
|---|---|
| A | Permeationsfläche, deformierter axialer Dichtungsqüerschnitt |
| $A_E$ | Teilumfangsfläche von 3, verpreßt |
| $A_N$ | Querschnitt von 4 |
| $A_R$ | radialer Querschnitt von 3, deformiert, |
| $A_V$ | Querschnitt von 3, deformiert, senkrecht zur axialen Richtung |
| $A_{RH}$ | radialer Querschnitt von 3, deformiert in einer Hälfte von 4 |
| AP | Abplattung |
| AU | radialer Querschnitt von 3 (Ausführung in Fig. 6 und 7), unverpreßt |
| $AU_E$ | radialer Querschnitt von 3 (elliptisch), unverpreßt |
| $AU_{opt}$ | radialer Querschnitt von 3, unverpreßt (Ausführung in Fig. 9) |
| $AU_R$ | radialer Querschnitt von 3 (OR), ünverpreßt |
| $(A/L)_{11}$ | Verhältniswert für $Q_1$ entsprechend Gleichung (1) |
| $(A/L)_{12}$ | Verhältniswert für $Q_2$ entsprechend Gleichung (1) |
| B | (radiale) Breite von $A_V$ |
| BL | Bogenlänge von $A_V$ |
| C1, C2 | Konstanten |
| $E_D$ | Elastizitätsmodul von 3 |
| $E_E$ | Elastizitätsmodul - ebener Körper |
| $E_Z$ | Elastizitätsmodul - zylindrischer Körper |
| $F_N$ | Normalkraft |
| $F_v$ | Vorpreßkraft von 3 |
| $F_s$ | Steckkraft von 2 mit 3 |
| $F_1$ | Kontaktfläche von 3 mit 1 |
| FG | Füllgrad von 4 |
| $FZ_U$ | Formzahl Quotient aus HA und HB |
| G | Grenzwert von A/L zwischen I und II |
| GL | axiale Gesamtlänge von AU |
| HA | axiale Haupterstreckung von 3, lange Ellipsen-Halbachse |
| HB | radiale Haupterstreckung von 3, kurze Ellipsen-Halbachse |
| K1, K2 | Scheitelkrümmungskreise |
| KF1, KF2 | Halbkreisflächen von AU |
| KL | Kontaktlänge von 3 mit 1 oder 2 |
| $KL_1$ | Kontaktlänge von 3 mit 1 |
| $KL_2$ | Kontaktlänge von 3 mit 2 |
| L | Permeationslänge |
| $L_A$ | Anlagelänge Zylinder/Ebene |
| $L_{max}$ | maximale Permeationslänge |
| $L_1$ | Anlagelänge von 3 an 1 über $U_{OI}$ |
| NL | Nutlänge von 4 (in Richtung X-X) |
| OR | O-Ring (mit unverpreßt kreisförmigem Querschnitt $AU_R$) |
| P | Permeationskoeffizient |
| $p_1$ | hoher Fluiddruck |
| $p_2$ | niedriger Fluiddruck |
| Q | Fluidmenge, Leckmenge |
| $Q_1$ | bisher tolerierter Wert von Q |
| $Q_2$ | erfindungsgemäß erzielbarer Wert von Q |
| q | spezifische Fluidmenge/Leckmenge |
| R | Radius |
| $R_{K1}, R_{K2}$ | Radien von K1, K2 |
| $R_1, R_2, R_3$ | Radien in $AU_{opt}$ |
| $R_A$ | Außenradius von 3, unverpreßt |

| $R_a$ | mittlerer Rauheitswert von 1, 2 |
|---|---|
| $R_I$ | Innenradius von 3, unverpreßt |
| $R_{max}$ | maximaler Rauheitswert von 1, 2 |
| $R_{RS}$ | (radiales) Krümmungsmaß von 3, unverpreßt |
| $R_{SA}$ | Außenradius von 5 |
| $R_{SN}$ | Radius von 5 auf dem Grund von 4 |
| $R_{SO}$ | Wert für $R_{RS}$ bei Kreisquerschnitt (OR) |
| $R_{OI}$ | Innenradius von 6 |
| RF | Rechteckfläche von AU |
| s | Spaltweite von 7 |
| SL | Seitenlänge der Halbfläche von AU |
| T | Tiefe von 4 |
| t | Zeit |
| U | Transformationsfaktor für HA |
| $U_{OI}$ | Innenumfang von 6 |
| V | Transformationsfaktor für HB |
| VP | Verpressung |
| X-X | Längsachse von 1,2 |
| Y-Y | radial gerichtete Mittenachse von AU |

| $\Delta p$ | Druckdifferenz |
|---|---|
| $\mu$ | Reibungszahl |
| $V_E$ | Querkontraktionszahl - ebener Körper |
| $V_Z$ | Querkontraktionszahl - zylindrischer Körper |
| $\Pi$ | Kreiskonstante |
| $\Theta$ | Rechengröße |
| $\sigma_{max}$ | Maximalspannung |
| $\sigma_{1max}$ | Maximalspannung in $F_1$ |
| $\sigma_{2max}$ | Maximalspannung |

**Patentansprüche**

1. Verbindungssystem für Leitungen, Armaturen oder Aggregate, die zur Führung eines mit einem gegenüber einem Vergleichsdruck ($p_2$) erhöhten Druck ($p_1$) beaufschlagten Fluids bestimmt sind, insbesondere für Kohlendioxid führende Systeme, umfassend ein erstes Kupplungsteil (1), wie ein Gehäuseteil, ein entlang einer Achse (X-X) in das erste Kupplungsteil (1) einführbares zweites Kupplungsteil (2), wie ein Steckerteil, und mindestens eine aus einem Elastomer bestehende, gaspermeable Umfangsdichtung (3), die in einer, eine Nuttiefe (T) und eine Nutlänge (NL) aufweisenden Nut (4) angeordnet ist, welche umfangsgemäß in einem der beiden Kupplungsteile (1, 2) ausgebildet ist, wobei das eine Kupplungsteil (2) mit einem Schaft (5) in eine runde Aufnahmeöffnung (6) des anderen Kupplungsteiles (1) einsteckbar ist, die Umfangsdichtung (3) nach dem Einstecken unter Deformation und Erzeugung einer radialen Vorpreßkaft ($F_V$) einen Spalt (7) mit einer Spaltweite (s) zwischen dem Außenradius ($R_{SA}$) des Schaftes (5) und dem Innenradius ($R_{OI}$) der Aufnahmeöffnung (6) abdichtet und dabei zumindest über eine senkrecht zum jeweiligen Radius ($R_{SA}$, $R_{OI}$) der Kupplungsteile (1, 2) in axialer Richtung (X-X) verlaufende Kontaktlänge (KL) an den Kupplungsteilen (1, 2) anliegt,
   **dadurch gekennzeichnet, daß** der Querschnitt (AU, $AU_R$, $AU_E$, $AU_{opt}$) der unverpreßten Umfangsdichtung (3), die Nuttiefe (T) und die Spaltweite (s) sowie die Nutlänge (NL) derart aufeinander abgestimmt sind, daß in einem, eine Permeation durch die Umfangsdichtung (3) bestimmenden Verhältnis ($A_E$/KL) einer permeationswirksamen Teilumfangsfläche ($A_E$) der Umfangsdichtung (3) zu der Kontaktlänge (KL) die Teilumfangsfläche ($A_E$) nicht größer ist als der halbe Wert einer senkrecht zur axialen Richtung (X-X) verlaufenden Querschnittsfläche ($A_V$) der deformierten Umfangsdichtung (3).

2. Verbindungssystem nach Anspruch 1,
   **dadurch gekennzeichnet, daß** der Querschnitt (AU, $AU_R$, $AU_E$, $AU_{opt}$) der unverpreßten Umfangsdichtung (3), die Nuttiefe (T) und die Spaltweite (s) sowie die Nutlänge (NL) derart aufeinander abgestimmt sind, daß in dem, die Permeation durch die Umfangsdichtung (3) bestimmenden Verhältnis ($A_E$/KL) der permeationswirksamen Teilumfangsfläche ($A_E$) der Umfangsdichtung (3) zu der Kontaktlänge (KL) die Teilumfangsfläche ($A_E$) nicht größer ist als ein Fünftel des Wertes einer senkrecht zur axialen Richtung (X-X) verlaufenden Querschnittsfläche ($A_V$) der deformierten Umfangsdichtung (3).

3. Verbindungssystem nach Anspruch 1 oder 2,
**dadurch gekennzeichnet, daß** die Teilumfangsfläche ($A_E$) in der Nähe des Spaltes (7) angeordnet und durch eine Bogenlinie (BL) einer verpreßten, radialen Querschnittsfläche ($A_R$) der deformierten Umfangsdichtung (3) bestimmt ist.

4. Verbindungssystem nach Anspruch 3,
**dadurch gekennzeichnet, daß** eine Länge der Bogenlinie (BL) bei verschwindender Bogenkrümmung minimal den Wert der Spaltweite (s) annimmt und maximal nicht größer ist als der halbe Wert, vorzugsweise ein Viertel des Wertes der Summe aus Spaltweite (s) und Nuttiefe (T).

5. Verbindungssystem nach einem der Ansprüche 1 bis 4,
**dadurch gekennzeichnet, daß** der Querschnitt (AU, $AU_R$, $AU_E$), $AU_{opt}$) der unverpreßten Umfangsdichtung (3), die Nuttiefe (T) und die Spaltweite (s) sowie die Nutlänge (NL) derart aufeinander abgestimmt sind, daß die permeationswirksame Teilumfangsfläche ($A_E$) unabhängig von einer Schnurstärke ($2*R_{SO}$, $2*HB$) der unverpreßten Umfangsdichtung (3) ist.

6. Verbindungssystem nach einem der Ansprüche 1 bis 5,
**dadurch gekennzeichnet, daß** die Größe einer Kontaktlänge ($KL_1$) zwischen dem Innenradius ($R_{OI}$) des ersten Kupplungsteiles (1) und der Umfangsdichtung (3) nach der Gleichung

$$KL_1 = C1 \sqrt{\frac{F_V R_{RS}}{E_D R_{OI}}}$$

dimensioniert ist, wobei C1 eine Konstante, $F_V$ die in radialer Richtung wirkende Vorspannkraft, $R_{OI}$ der Innenradius des ersten Kupplungsteiles (1), $E_D$ der Wert des Elastizitätsmoduls der Umfangsdichtung (3) und $R_{RS}$ ein Maß für die konvexe Krümmung der Dichtung (3), z.B. der Schnurradius ($R_{SO}$) einer O-Ringdichtung (OR) im unverpreßten Zustand ist.

7. Verbindungssystem nach einem der Ansprüche 1 bis 6,
**dadurch gekennzeichnet, daß** ein unter Berücksichtigung der möglichen Wärmeausdehnung der Umfangsdichtung (3) als Quotient aus einem in der Nut (4) liegenden Anteil des verpreßten, radialen Querschnitts ($A_R$) der Umfangsdichtung (3) und der Querschnittsfläche ($A_N$) der Nut (4) berechneter Füllgrad (FG) der Nut (4) im Bereich von 58,0 Prozent bis 100,0 Prozent, vorzugsweise von 78,0 Prozent bis 98,0 Prozent, liegt.

8. Verbindungssystem nach einem der Ansprüche 1 bis 7,
**dadurch gekennzeichnet, daß** bei asymmetrischer Lage der Umfangsdichtung (3) in der Nut (4) unter Berücksichtigung der möglichen Wärmeausdehnung der Umfangsdichtung (3) ein als Quotient aus einem in einer Hälfte der Querschnittsfläche ($A_N$) der Nut (4) liegenden, vergleichsweise größeren Anteil ($A_{RH}$) des verpreßten, radialen Querschnitts ($A_R$) der Umfangsdichtung (3) und der halben Querschnittsfläche ($A_N/2$) der Nut (4) berechneter Füllgrad (FGH) der Nut (4) im Bereich von 58,0 Prozent bis 100,0 Prozent, vorzugsweise von 78,0 Prozent bis 98,0 Prozent, liegt.

9. Verbindungssystem nach einem der Ansprüche 1 bis 8,
**dadurch gekennzeichnet, daß** der Querschnitt ($AU_E$, AU, $AU_{opt}$) der Umfangsdichtung (3) im unverpreßten Zustand eine Vorform aufweist, bei der ein Quotient ($FZ_U$) aus einer axialen Haupterstreckung (HA) und einer radialen Haupterstreckung (HB) des Dichtungsquerschnitts einen Wert von größer 1, vorzugsweise von größer 2, aufweist.

10. Verbindungssystem nach einem der Ansprüche 1 bis 9,
**dadurch gekennzeichnet, daß** der Querschnitt ($AU_E$) der Umfangsdichtung (3) im unverpreßten Zustand eine elliptische Form aufweist.

11. Verbindungssystem nach einem der Ansprüche 1 bis 9,

**dadurch gekennzeichnet, daß** sich der Querschnitt (AU) der unverpreßten Umfangsdichtung (3) aus zwei Halbkreisflächen (KF1, KF2) oder Kreisegment-Flächen und einer dazwischenliegenden Rechteckfläche (RF) zusammensetzt.

12. Verbindungssystem nach einem der Ansprüche 1 bis 9,
**dadurch gekennzeichnet**, däß der Querschnitt ($AU_{opt}$) der unverpreßten Umfangsdichtung (3) in der Grundgestalt aus einem Rechteck besteht, das zwei mit einem ersten Krümmungsradius ($R_1$) konvex, gewölbte Längsseiten, zwei mit einem zweiten Krümmungsradius ($R_2$) konvex gewölbte Querseiten und vier mit einem dritten Krümmungsradius ($R_3$) konvex verrundete Ecken aufweist.

13. Verbindungssystem nach Anspruch 12,
**dadurch gekennzeichnet, daß** der dritte Krümmungsradius ($R_3$) kleiner ist als der erste Krümmungsradius ($R_1$) und der erste Krümmungsradius ($R_1$) kleiner ist als der zweite Krümmungsradius ($R_2$)

14. Verbindungssystem nach einem der Ansprüche 1 bis 8,
**dadurch gekennzeichnet, daß** die Umfangsdichtung (3) durch einen O-Ring (OR) mit im unverpreßten Zustand kreisförmigem Querschnitt ($AU_R$) gebildet ist, bei dem das Verhältnis von Innendurchmesser (R) zur Stärke seiner Schnur ($2*R_{SO}$), kleiner oder gleich 6, vorzugsweise kleiner ist als 3, und bei dem eine minimale Verpressung (VP) in einem Bereich von mehr als 15 Prozent, vorzugsweise von mehr als 25 Prozent bis zu maximal 40 Prozent, liegt.

15. Verbindungssystem nach einem der Ansprüche 1 bis 14,
**dadurch gekennzeichnet, daß** sich im radialen Querschnitt ($A_R$) der deformierten Umfangsdichtung (3) die Kontaktlänge (KL) um weniger als 15 Prozent, vorzugsweise um weniger als 10 Prozent, besonders bevorzugt um weniger als 5 Prozent, von einer maximalen axialen Permeationslänge ($L_{max}$) durch die Umfangsdichtung (3) unterscheidet.

16. Verbindungssystem nach einem der Ansprüche 1 bis 15,
**dadurch gekennzeichnet, daß** das erste Kupplungsteil (1) und/oder das zweite Kupplungsteil (2) aus metallischen Werkstoffen, insbesondere aus Aluminium- oder hochlegierten Edelstahllegierungen, bestehen.

17. Verbindungssystem nach einem der Ansprüche 1 bis 16,
**dadurch gekennzeichnet, daß** ein maximaler Rauheitswert ($R_{max}$) der Oberflächen der Kupplungsteile (1, 2), zumindest im Bereich des Außenradius ($R_{SA}$) des Schaftes (5) und des Innenradius ($R_{OI}$) der Aufnahmeöffnung (6), wo die Umfangsdichtung (3) anliegt, kleiner ist als 16 $\mu$m, vorzugsweise kleiner als 10 $\mu$m.

18. Verbindungssystem nach einem der Ansprüche bis 17,
**dadurch gekennzeichnet, daß** die Oberflächen der Kupplungsteile (1, 2), zumindest im Bereich des Außenradius ($R_{SA}$) des Schaftes (5) und des Innenradius ($R_{OI}$) der Aufnahmeöffnung (6), wo die Umfangsdichtung (3) anlieg. durch Glattwalzen von Flächen, die gegenüber den bearbeiteten Oberflächen ein Aufmaß von 0,018 mm bis 0,040 mm und eine Rauheit ($R_a$) im Bereich von 1,6 bis 3,2 $\mu$m aufweisen, hergestellt sind.

19. Verbindungssystem nach einem der Ansprüche 1 bis 18;
**dadurch gekennzeichnet, daß** die Umfangsdichtung (3) aus einer polymeren Fluor-Kohlenstoffverbindung, aus synthetischem Kautschuk, wie Silikon-kautschuk, NBR oder H-NBR, PUR, EPDM, SBR, o.ä. besteht.

20. Verbindungssystem nach einem der Ansprüche 1 bis 19,
**dadurch gekennzeichnet, daß** die Umfangsdichtung (3) eine Shore-A-Härte im Bereich von 70 bis 90 aufweist.

21. Verbindungssystem nach einem der Ansprüche 1 bis 20,
**dadurch gekennzeichnet, daß** zwei oder mehr Umfangsdichtungen (3) in axialer Richtung (X-X) hintereinander angeordnet sind.

22. Verbindungssystem nach Anspruch 21,
**dadurch gekennzeichnet, daß** eine der Umgebungsatmosphäre zugängliche äußere Umfangsdichtung (3) durch Alterung einen verringerten Permeabilitätskoeffizienten (P) aufweist als eine vor der Umgebungsatmosphäre durch die äußere Umfangsdichtung (3) geschützte innere Umfangsdichtung (3)

23. Verbindungssystem nach einem der Ansprüche 1 bis 22,

**dadurch gekennzeichnet, daß** das durch, den Druck ($P_1$, $P_2$) beaufschlagte Fluid Kohlendioxid ($CO_2$) ist.

24. Verbindungssystem nach einem der Ansprüche 1 bis 23,
**dadurch gekennzeichnet, daß** der das Fluid beaufschlagende Druck ($p_1$) im Bereich von etwa 10 bar bis 180 bar liegt.

25. Verbindungssystem nach einem der Ansprüche 1 bis 24,
**dadurch gekennzeichnet, daß** ein Wert ($Q_2$) der Menge (Q) des infolge von Permeation durch die Umfangsdichtung (3) durchgesetzten Fluids nicht größer ist als etwa 2,5 g pro Jahr und Verbindung, vorzugsweise nicht größer als 1 g pro Jahr und Verbindung.

26. Verbindungssystem nach einem der Ansprüche 1 bis 25, insbesondere nach einem der Ansprüche 23 bis 25,
**dadurch gekennzeichnet, daß** das die Permeation durch die Umfangsdichtung (3) bestimmende Verhältnis ($A_E$/KL) bei Raumtemperatur nicht größer ist als 50,0 mm, vorzugsweise nicht größer als 17,5mm.

27. Verbindungssystem nach einem der Ansprüche 1 bis 26, insbesondere nach einem der Ansprüche 23 bis 26,
**dadurch gekennzeichnet, daß** das die Permeation durch die Umfangsdichtung (3) bestimmende Verhältnis ($A_E$/KL) bei 100 °C nicht größer ist als 4,5 mm, vorzugsweise nicht größer als 1,2 mm.

28. Verbindungssystem nach einem der Ansprüche 1 bis 27, insbesondere nach einem der Ansprüche 23 bis 27,
**dadurch gekennzeichnet, daß** das die Permeation durch die Umfangsdichtung (3) bestimmende Verhältnis ($A_E$/KL) bei 150 °C nicht größer ist als 1,00 mm, vorzugsweise nicht größer als 0,25 mm.

29. Verbindungssystem nach einem der Ansprüche 1 bis 28,
**dadurch gekennzeichnet, daß** eine zum Einstecken unter Deformation der Umfangsdichtung (3) und Erzeugung der radialen Vorpreßkaft ($F_V$) aufzubringende Steckkraft ($F_S$) bei einem Innenradius ($R_{OI}$) des ersten Kupplungsteiles (1) in einem Bereich von etwa 6 mm bis 13 mm kleiner ist als 100 N, vorzugsweise kleiner als 50 N, besonders bevorzugt kleiner als 30 N.

30. Verbindungssystem nach einem der Ansprüche 1 bis 29,
**dadurch gekennzeichnet, daß** die Umfangsdichturig (3) rüifveiner Gasbarrieren-Beschichtung versehen ist.

31. Umfangsdichtung (3) für ein Verbindungssystem nach einem der Ansprüche 1 bis 30,
**dadurch gekennzeichnet, dass** der Querschnitt ($AU_{opt}$) der unverpreßten Umfangsdichtung (3) in der Grundgestalt aus einem Rechteck besteht, das zwei mit einem ersten Krümmungsradius ($R_1$) konvex gewölbte Längsseiten, zwei mit einem zweiten Krümmungsradius ($R_2$) konvex gewölbte Querseiten und vier mit einem dritten Krümmungsradius ($R_3$) konvex verrundete Ecken aufweist, wobei der dritte Krümmungsradius ($R_3$) kleiner ist als der erste Krümmungs-radius ($R_1$) und der erste Krümmungsradius ($R_1$) kleiner ist als der zweite Krümmungsradius ($R_2$).

32. Umfangsdichtung (3) nach Anspruch 31,
**dadurch gekennzeichnet, dass** die Umfangsdichtung (3) aus einer polymeren Fluor-Kohlenstoffverbindung, aus synthetischem Kautschuk, wie Silikonkautschuk, NBR oder H-NBR, PUR, EPDM, SBR o.ä., besteht.

33. Umfangsdichtung (3) nach Anspruch 31 oder 32,
**dadurch gekennzeichnet, dass** die Umfangsdichtung (3) eine Shore-A-Härte im Bereich von 70 bis 90 aufweist.

34. Umfangsdichtung (3) nach einem der Ansprüche 31 bis 33,
**dadurch gekennzeichnet, dass** die Umfangsdichtung (3) mit einer Gasbameren-Beschichtung versehen ist.

**Claims**

1. A connecting system for pipelines, fittings or assemblies intended for carrying a fluid acted upon with a pressure ($p_1$) which is raised relative to a comparison pressure ($p_2$), particularly for systems carrying carbon dioxide, comprising a first coupling part (1), such as a housing part, a second coupling part (2), such as a connector part, which may be introduced into the first coupling part (1) along an axis (X-X), and at least one gas-permeable circumferential seal (3) consisting of an elastomer, disposed in a groove (4) having a groove depth (T) and a groove length (NL), which groove is formed circumferentially in one of the two coupling parts (1, 2), a shank (5) of one coupling part (2) being insertable into a round receiving opening (6) of the other coupling part (1), the circumferential seal (3), after the insertion with deformation and the creation of a radial pre-pressing force ($F_v$), sealing a gap (7) with a gap width (s) between the external radius ($R_{SA}$) of the shank (5) and the internal radius ($R_{OI}$) of the receiving opening (6) and thereby abutting the coupling parts (1, 2) at least over a contact length (KL) extending in the axial direction (X-X) perpendicularly to the respective radii ($R_{SA}$, $R_{OI}$) of the coupling parts (1, 2), **characterised in that** the cross-section (AU, $AU_R$, $AU_E$, $AU_{opt}$) of the uncompressed circumferential seal (3), the groove depth (T) and the gap width (s) as well as the groove length (NL) are adapted to one another in such a way that in a ratio ($A_E$/KL), defining permeation through the circumferential seal (3), of an actively permeable partial circumferential surface ($A_E$) of the circumferential seal (3) to the contact length (KL), the partial circumferential surface ($A_E$) is not greater than half the value of a cross-sectional surface ($A_v$) of the deformed circumferential seal (3), extending perpendicularly to the axial direction (X-X).

2. A connecting system according to Claim 1,
   **characterised in that** the cross-section (AU, $AU_R$, $AU_E$, $AU_{opt}$) of the uncompressed circumferential seal (3), the groove depth (T) and the gap width (s) as well as the groove length (NL) are adapted to one another in such a way that in the ratio ($A_E$/KL), defining permeation through the circumferential seal (3), of the actively permeable partial circumferential surface ($A_E$) of the circumferential seal (3) to the contact length (KL), the partial circumferential surface ($A_E$) is not greater than a fifth of the value of a cross-sectional surface ($A_v$) of the deformed circumferential seal (3), extending perpendicularly to the axial direction (X-X).

3. A connecting system according to Claim 1 or 2,
   **characterised in that** the partial circumferential surface ($A_E$) is disposed in the vicinity of the gap (7) and is defined by a curved line (BL) of a compressed, radial cross-sectional surface ($A_R$) of the deformed circumferential seal (3).

4. A connecting system according to Claim 3,
   **characterised in that** a length of the curved line (BL) as the curve's curvature vanishes assumes the value of the gap width (s) as minimum value and as maximum value is not greater than half the value, preferably quarter the value, of the sum of the gap width (s) and the groove depth (T).

5. A connecting system according to one of Claims 1 to 4,
   **characterised in that** the cross-section (AU, $AU_R$, $AU_E$, $AU_{opt}$) of the uncompressed circumferential seal (3), the groove depth (T) and the gap width (s) as well as the groove length (NL) are adapted to one another in such a way that the actively permeable partial circumferential surface ($A_E$) is independent of a cord thickness ($2{*}R_{SO}$, $2{*}HB$) of the uncompressed circumferential seal (3).

6. A connecting system according to one of Claims 1 to 5,
   **characterised in that** the size of a contact length ($KL_1$) between the internal radius ($R_{OI}$) of the first coupling part (1) and the circumferential seal (3) is dimensioned in accordance with the equation
   in which C1 is a constant, $F_v$ the prestressing force acting in the radial direction, $R_{OI}$ the internal radius of the first coupling part (1), $E_D$ the value of the modulus of elasticity of the circumferential seal (3) and $R_{RS}$ a measurement for the convex curvature of the seal (3), e.g. the cord radius ($R_{SO}$) of an O-ring seal (OR) in the uncompressed state.

7. A connecting system according to one of Claims 1 to 6,
   **characterised in that** a filling level (FG) of the groove (4), calculated taking into account the possible thermal expansion of the circumferential seal (3) as the quotient of a proportion of the compressed radial cross-section ($A_R$) of the circumferential seal (3) lying in the groove (4) and of the cross-sectional surface ($A_N$) of the groove (4), lies within the range of 58.0 percent to 100.0 percent, preferably 78.0 percent to 98.0 percent.

8. A connecting system according to one of Claims 1 to 7,
   **characterised in that**, with an asymmetrical position of the circumferential seal (3) in the groove (4), a filling level (FGH) of the groove (4), calculated taking into account the possible thermal expansion of the circumferential seal (3) as the quotient of a comparatively greater proportion ($A_{RH}$) of the compressed radial cross-section ($A_R$) of the circumferential seal (3) lying in half of the cross-sectional surface ($A_N$) of the groove (4) and of half the cross-sectional surface ($A_N/2$) of the groove (4), lies within the range of 58.0 percent to 100.0 percent, preferably 78.0 percent to 98.0 percent.

9. A connecting system according to one of Claims 1 to 8,
   **characterised in that** the cross-section ($AU_E$, AU, $AU_{opt}$) of the circumferential seal (3) in the uncompressed state has an initial shape in which a quotient ($FZ_U$) of a main axial extent (HA) and a main radial extent (HB) of the seal cross-section has a value greater than 1, preferably greater than 2.

10. A connecting system according to one of Claims 1 to 9,
    **characterised in that** the cross-section ($AU_E$) of the circumferential seal (3) in the uncompressed state has an elliptical shape.

11. A connecting system according to one of Claims 1 to 9,
    **characterised in that** the cross-section (AU) of the uncompressed circumferential seal (3) is composed of two semicircular surfaces (KF1, KF2) or circular segment surfaces and a rectangular surface (RF) located therebetween.

12. A connecting system according to one of Claims 1 to 9,
    **characterised in that** the cross-section ($AU_{opt}$) of the uncompressed circumferential seal (3) consists in its basic shape of a rectangle which has two longitudinal sides curved convexly with a first radius of curvature ($R_1$), two transverse sides curved convexly with a second radius of curvature ($R_2$) and four corners rounded convexly with a third radius of curvature ($R_3$).

13. A connecting system according to Claim 12,
    **characterised in that** the third radius of curvature ($R_3$) is smaller than the first radius of curvature ($R_1$) and the first radius of curvature ($R_1$) is smaller than the second radius of curvature ($R_2$).

14. A connecting system according to one of Claims 1 to 8,
    **characterised in that** the circumferential seal (3) is formed by an O-ring (OR) with a circular cross-section ($AU_R$) in the uncompressed state, in which the ratio of the internal diameter (R) to the thickness of its cord ($2*R_{SO}$) is smaller than or equal to 6, preferably smaller than 3, and in which a minimum compression (VP) lies within a range of more than 15 percent, preferably more than 25 percent up to a maximum of 40 percent.

15. A connecting system according to one of Claims 1 to 14,
    **characterised in that**, in the radial cross-section ($A_R$) of the deformed circumferential seal (3), the contact length (KL) differs from a maximum axial permeation length ($L_{max}$) through the circumferential seal (3) by less than 15 percent, preferably by less than 10 percent, particularly preferably by less than 5 percent.

16. A connecting system according to one of Claims 1 to 15,
    **characterised in that** the first coupling part (1) and/or the second coupling part (2) consist of metallic materials, particularly aluminium- or high-alloy high-grade steel alloys.

17. A connecting system according to one of Claims 1 to 16,
    **characterised in that** a maximum roughness value ($R_{max}$) of the surfaces of the coupling parts (1, 2), at least in the region of the external radius ($R_{SA}$) of the shank (5) and of the internal radius ($R_{OI}$) of the receiving opening (6) where the circumferential seal (3) abuts, is less than 16$\mu$m, preferably less than 10 $\mu$m.

18. A connecting system according to one of Claims 1 to 17,
    **characterised in that** the surfaces of the coupling parts (1, 2), at least in the region of the external radius ($R_{SA}$) of the shank (5) and of the internal radius ($R_{OI}$) of the receiving opening (6) where the circumferential seal (3) abuts, are produced by the finish-rolling of surfaces which relative to the treated surfaces have an oversize of 0.018 mm to 0.040 mm and a roughness ($R_a$) within the range of 1.6 to 3.2 $\mu$m.

19. A connecting system according to one of Claims 1 to 18,
    **characterised in that** the circumferential seal (3) consists of a polymeric fluorocarbon compound, synthetic rubber, such as silicon rubber, NBR or H-NBR, PUR, EPDM, SBR or the like.

20. A connecting system according to one of Claims 1 to 19,
    **characterised in that** the circumferential seal (3) has a Shore A hardness within the range of 70 to 90.

21. A connecting system according to one of Claims 1 to 20,
    **characterised in that** two or more circumferential seals (3) are disposed one after the other in the axial direction (X-X).

22. A connecting system according to Claim 21,

**characterised in that** an external circumferential seal (3) accessible to the ambient atmosphere has a reduced permeability coefficient (P) through aging than an internal circumferential seal (3) protected from the ambient atmosphere by the external circumferential seal (3).

**23.** A connecting system according to one of Claims 1 to 22,
**characterised in that** the fluid acted upon by the pressure ($p_1$, $p_2$) is carbon dioxide ($CO_2$).

**24.** A connecting system according to one of Claims 1 to 23,
**characterised in that** the pressure ($p_1$) acting upon the fluid lies within the range off about 10 bar to 180 bar.

**25.** A connecting system according to one of Claims 1 to 24,
**characterised in that** a value ($Q_2$) of the quantity (Q) of the fluid that has penetrated through the circumferential seal (3) due to permeation is not more than about 2.5 g per year and per connection, preferably not more than 1 g per year and per connection.

**26.** A connecting system according to one of Claims 1 to 25, particularly according to one of Claims 23 to 25,
**characterised in that** the ratio ($A_E$/KL) defining the permeation through the circumferential seal (3) at room temperature is not greater than 50.0 mm, preferably not greater than 17.5 mm.

**27.** A connecting system according to one of Claims 1 to 26, particularly according to one of Claims 23 to 26,
**characterised in that** the ratio ($A_E$/KL) defining the permeation through the circumferential seal (3) at 100°C is not greater than 4.5 mm, preferably not greater than 1.2 mm.

**28.** A connecting system according to one of Claims 1 to 27, particularly according to one of Claims 23 to 27,
**characterised in that** the ratio ($A_E$/KL) determining the permeation through the circumferential seal (3) at 150°C is not greater than 1.00 mm, preferably not greater than 0.25 mm.

**29.** A connecting system according to one of Claims 1 to 28,
**characterised in that** an insertion force ($F_s$) to be applied for the insertion with deformation of the circumferential seal (3) and creation of the radial pre-pressing force ($F_v$), with an internal radius ($R_{OI}$) of the first coupling part (1) within a range of about 6 mm to 13 mm, is less than 100 N, preferably less than 50 N, particularly preferably less than 30 N.

**30.** A connecting system according to one of Claims 1 to 29,
**characterised in that** the circumferential seal (3) is provided with a gas barrier coating.

**31.** A circumferential seal (3) for a connecting system according to one of Claims 1 to 30,
**characterised in that** the cross-section ($AU_{opt}$) of the uncompressed circumferential seal (3) consists in its basic shape of a rectangle which has two longitudinal sides curved convexly with a first radius of curvature ($R_1$), two transverse sides curved convexly with a second radius of curvature ($R_2$) and four corners rounded convexly with a third radius of curvature ($R_3$), the third radius of curvature ($R_3$) being smaller than the first radius of curvature ($R_1$) and the first radius of curvature ($R_1$) being smaller than the second radius of curvature ($R_2$).

**32.** A circumferential seal (3) according to Claim 31,
**characterised in that** the circumferential seal (3) consists of a polymeric fluorocarbon compound, synthetic rubber, such as silicon rubber, NBR or H-NBR, PUR, EPDM, SBR or the like.

**33.** A circumferential seal (3) according to Claim 31 or 32,
**characterised in that** the circumferential seal (3) has a Shore A hardness within the range of 70 to 90.

**34.** A circumferential seal (3) according to one of Claims 31 to 33,
**characterised in that** the circumferential seal (3) is provided with a gas barrier coating.

**Revendications**

**1.** Système de raccord pour tuyaux, garnitures ou ensembles destinés au transport d'un fluide soumis à une pression augmentée ($p_1$) par rapport à une pression de référence ($p_2$), en particulier pour des systèmes transportant de l'oxyde de carbone, constitué d'une première pièce de couplage (1), telle qu'une partie de boîtier, une deuxième pièce de couplage (2) insérable le long de l'axe (X-X) dans la première pièce de couplage (1), telle qu'une pièce enfichable et au moins d'un joint d'étanchéité (3) en élastomère, perméable au gaz qui est logé dans une rainure (4) de profondeur (T) et de largeur (NL) et qui se forme autour de l'une des deux pièces de couplage (1, 2), la pièce de couplage (2) étant enfichable via un corps (5) dans un logement (6) de l'autre pièce de couplage (1), le joint d'étanchéité (3) assurant, après enfichage sous déformation et génération d'une force radiale de précontrainte ($F_V$), l'étanchéité d'une ouverture (7) avec une largeur (s), comprise entre le rayon extérieur ($R_{SA}$) du corps (5) et le rayon intérieur ($R_{OI}$) du logement (6) et s'appliquant sur les pièces de couplage (1, 2) au moins par une longueur de contact (KL) dirigée dans le sens axial (X-X), verticalement au rayon considéré ($R_{SA}$, $R_{OI}$) des pièces de couplage (1, 2),

**caractérisé en ce que** la section (AU, $AU_R$, $AU_E$, $AU_{opt}$) du j oint d'étanchéité (3) non comprimé, la profondeur de la rainure (T) et la largeur de la gorge (s) ainsi que la largeur de la rainure (NL) sont coordonnées entre elles de manière à ce que dans un rapport ($A_E$/KL) déterminant la perméation à travers le joint d'étanchéité (3), entre la surface d'étanchéité partielle ($A_E$) à effet de perméation du joint d'étanchéité (3) et la longueur de contact (KL), la surface d'étanchéité partielle ($A_E$) ne soit pas supérieure à la moitié de la valeur d'une aire sectionnelle ($A_V$), orientée verticalement par rapport au sens axial (X-X) du joint d'étanchéité (3) déformé.

**2.** Système de raccord selon la revendication 1,
**caractérisé en ce que** la section (AU, $AU_R$, $AU_E$, $AU_{opt}$) du j oint d'étanchéité (3) non comprimé, la profondeur de la rainure (T) et la largeur de la gorge (s) ainsi que la largeur de la rainure (NL) sont coordonnées entre elles de manière à ce que dans le rapport ($A_E$/KL) déterminant la perméation à travers le joint d'étanchéité (3), entre la surface d'étanchéité partielle ($A_E$) à effet de perméation du joint d'étanchéité (3) et la longueur de contact (KL), la surface d'étanchéité partielle ($A_E$) ne soit pas supérieure au cinquième de la valeur d'une aire sectionnelle ($A_V$), orientée verticalement par rapport au sens axial (X-X) du joint d'étanchéité (3) déformé.

**3.** Système de raccord selon l'une quelconque des revendications 1 ou 2,
**caractérisé en ce que** la surface d'étanchéité partielle ($A_E$) est disposée à proximité de l'ouverture (7) et est déterminée par une ligne courbe (BL) d'une aire sectionnelle ($A_R$) radiale comprimée du joint d'étanchéité (3) déformé.

**4.** Système de raccord selon la revendication 3,
**caractérisé en ce qu'**en cas de disparition du cintrage, une longueur de la ligne courbe (BL) prend au moins la valeur minimale de la largeur de l'ouverture (s) et une valeur maximale ne dépassant pas la moitié de la valeur, de préférence un quart de la valeur de la somme de la largeur de l'ouverture (s) et de la profondeur de la rainure (T).

**5.** Système de raccord selon l'une quelconque des revendications 1 à 4,
**caractérisé en ce que** la section (AU, $AU_R$, $AU_E$, $AU_{opt}$) du joint d'étanchéité (3) non comprimé, la profondeur de la rainure (T) et la largeur de l'ouverture (s) ainsi que la largeur de la rainure (NL) sont coordonnées entre elles de telle sorte que la surface d'étanchéité partielle ($A_E$) déterminant la perméation soit indépendante de l'épaisseur du cordon (2*$R_{SO}$, 2*HB) du joint d'étanchéité (3) non comprimé.

**6.** Système de raccord selon l'une quelconque des revendications 1 à 5,
**caractérisé en ce qu**e la grandeur d'une longueur de contact ($KL_1$) entre le rayon intérieur ($R_{OI}$) de la première pièce de couplage (1) et le joint d'étanchéité (3) est dimensionnée selon la formule

$$KL_1 = C1 \sqrt{\frac{F_V R_{RS}}{E_D R_{OI}}}$$

où C1 est une constante, $F_V$ la tension de précontrainte agissant dans le sens radial, $R_{OI}$ le rayon intérieur de la première pièce de couplage (1), $E_D$ la valeur du module d'élasticité du joint d'étanchéité (3) et $R_{RS}$ une mesure pour le cintrage convexe du joint (3), p. ex. le rayon du cordon ($R_{SO}$) d'un joint d'étanchéité (OR) à l'état non comprimé.

**7.** Système de raccord selon l'une quelconque des revendications 1 à 6,
**caractérisé en ce qu'**en tenant compte de la dilatation thermique possible du joint d'étanchéité (3), un degré de remplissage (FG) calculé sous forme de quotient d'une partie de la section radiale comprimée ($A_R$) du joint d'étanchéité (3), logée dans la rainure (4), par la surface de la section ($A_N$) de la rainure (4), se situe dans la plage comprise entre 58,0 et 100,0 pour cent, de préférence entre 78,0 et 98,0 pour cent.

8. Système de raccord selon l'une quelconque des revendications 1 à 7,
**caractérisé en ce que** si le joint d'étanchéité (3) occupe une position asymétrique dans la rainure (4), en tenant compte de la dilatation thermique possible du joint d'étanchéité (3), un degré de remplissage calculé (FGH) de la rainure (4), sous forme de quotient d'une partie comparativement plus grande ($A_{RH}$) de la section radiale comprimée ($A_R$) du joint d'étanchéité (3) logée dans une moitié de l'aire sectionnelle ($A_N$) de la rainure (4), par la demi-aire sectionnelle ($A_N/2$) de la rainure (4), se situe dans la plage comprise entre 58,0 et 100,0 pour cent, de préférence entre 78,0 et 98,0 pour cent.

9. Système de raccord selon l'une quelconque des revendications 1 à 8,
**caractérisé en ce que** la section ($AU_E$, AU, $AU_{opt}$) du joint d'étanchéité (3) présente à l'état non comprimé, une préforme dans laquelle un quotient ($FZ_u$) d'un étirement principal axial (HA) par un étirement principal radial (HB) de la section du joint présente une valeur supérieure à 1, de préférence supérieure à 2.

10. Système de raccord selon l'une quelconque des revendications 1 à 9,
**caractérisé en ce que** la section ($AU_E$) du joint d'étanchéité (3) présente à l'état non comprimé, une forme elliptique.

11. Système de raccord selon l'une quelconque des revendications 1 à 9,
**caractérisé en ce que** la section (AU) du joint d'étanchéité (3) non comprimé est constituée des surfaces de deux demi-cercles (KF1, KF2) ou segments de cercle et de la surface d'un rectangle (RF) situé entre elles.

12. Système de raccord selon l'une quelconque des revendications 1 à 9,
**caractérisé en ce que** la section ($AU_{opt}$) du joint d'étanchéité (3) non comprimé est constitué, dans sa forme de base, d'un rectangle qui présente deux côtés longitudinaux à courbure convexe avec un premier rayon de courbure ($R_1$), deux côtés transversaux à courbure convexe avec un second rayon de courbure ($R_2$) et quatre angles convexes arrondis avec un troisième rayon de courbure ($R_3$).

13. Système de raccord selon la revendication 12
**caractérisé en ce que** le troisième rayon de courbure ($R_3$) est inférieur au premier rayon de courbure ($R_1$) et que le premier rayon de courbure ($R_1$) est inférieur au deuxième rayon de courbure ($R_2$).

14. Système de raccord selon l'une quelconque des revendications 1 à 8,
**caractérisé en ce que** le joint d'étanchéité (3) est formé par un joint d'étanchéité (OR) avec une section circulaire ($AU_R$) à l'état non comprimé, pour lequel le rapport entre le diamètre intérieur (R) et l'épaisseur de son cordon ($2*R_{SO}$) est inférieur ou égal à 6, de préférence inférieur à 3 et pour lequel une compression minimale (VP) se situe dans une plage de plus de 15 pour cent, de préférence de plus de 25 pour cent à 40 pour cent au maximum.

15. Système de raccord selon l'une quelconque des revendications 1 à 14,
**caractérisé en ce que** dans la section radiale ($A_R$) du joint d'étanchéité (3) déformé, la différence entre la longueur de contact (KL) et une longueur de perméation axiale maximale ($L_{max}$) à travers le joint d'étanchéité (3) est égale à moins de 15 pour cent, de préférence à moins de 10 pour cent, de préférence plus particulièrement à moins de 5 pour cent.

16. Système de raccord selon l'une quelconque des revendications 1 à 15,
**caractérisé en ce que** la première pièce de couplage (1) et/ou la deuxième pièce de couplage (2) sont constituées de matériaux métalliques, en particulier d'alliages d'aluminium ou d'aciers spéciaux fortement alliés.

17. Système de raccord selon l'une quelconque des revendications 1 à 16,
**caractérisé en ce qu'**une valeur de rugosité maximale ($R_{max}$) des surfaces des pièces de couplage (1, 2) est inférieure à 16 $\mu$m, de préférence inférieure à 10 $\mu$m, du moins dans la zone du rayon extérieur ($R_{SA}$) du corps (5) et du rayon intérieur ($R_{OI}$) du logement (6) dans lequel est placé le joint d'étanchéité (3).

18. Système de raccord selon l'une quelconque des revendications 1 à 17,
**caractérisé en ce que** du moins dans la zone du rayon extérieur ($R_{SA}$) du corps (5) et du rayon intérieur ($R_{OI}$) du logement (6) dans lequel est placé le joint d'étanchéité (3), les surfaces des pièces de couplage (1, 2) sont réalisées par polissage cylindrique présentant une surépaisseur de 0,018 mm à 0,040 mm par rapport aux surfaces usinées et une rugosité ($R_3$) dans la plage de 1,6 à 3,2 $\mu$m.

**19.** Système de raccord selon l'une quelconque des revendications 1 à 18
**caractérisé en ce qu**e le joint d'étanchéité (3) est constitué d'un composé polymère fluorocarboné, de caoutchouc synthétique, notamment de caoutchouc silicone, NBR ou H-NBR, PUR, EPDM, SBR.

**20.** Système de raccord selon l'une quelconque des revendications 1 à 19,
**caractérisé en ce que** le joint d'étanchéité (3) présente une dureté shore A dans la plage de 70 à 90.

**21.** Système de raccord selon l'une quelconque des revendications 1 à 20,
**caractérisé en ce que** deux ou plusieurs joints d'étanchéité (3) sont disposés l'un derrière l'autre en direction axiale (X-X).

**22.** Système de raccord selon la revendication 21,
**caractérisé en ce qu'**un joint d'étanchéité extérieur (3) en contact avec l'air ambiant présente par suite d'altération, un coefficient de perméabilité (P) réduit par rapport à un joint d'étanchéité (3) intérieur protégé de l'air ambiant par le joint d'étanchéité (3) extérieur.

**23.** Système de raccord selon l'une quelconque des revendications 1 à 22,
**caractérisé en ce que** le fluide soumis à la pression $(p_1, p_2)$ est du dioxyde de carbone $(CO_2)$.

**24.** Système de raccord selon l'une quelconque des revendications 1 à 23,
**caractérisé en ce que** la pression $(p_1)$ exercée sur le fluide se situe dans la plage de 10 bars à 180 bars environ.

**25.** Système de raccord selon l'une quelconque des revendications 1 à 24,
**caractérisé en ce qu'**une valeur $(Q_2)$ de la quantité (Q) de fluide ayant traversé le joint d'étanchéité (3) par suite de la perméation n'est pas supérieure à environ 2,5 g par an et par raccord, de préférence n'est pas supérieure à 1 g par an et par raccord.

**26.** Système de raccord selon l'une quelconque des revendications 1 à 25, en particulier des revendications 23 à 25,
**caractérisé en ce que** le rapport $(A_E/KL)$ déterminant la perméation à travers le joint d'étanchéité (3), n'est pas supérieure à 50,0 mm, de préférence n'est pas supérieure à 17,5 mm, à température ambiante.

**27.** Système de raccord selon l'une quelconque des revendications 1 à 26, en particulier des revendications 23 à 26,
**caractérisé en ce que** le rapport $(A_E/KL)$ déterminant la perméation à travers le joint d'étanchéité (3), n'est pas supérieure à 4,5 mm, de préférence n'est pas supérieure à 1,2 mm, à 100 °C.

**28.** Système de raccord selon l'une quelconque des revendications 1 à 27, en particulier des revendications 23 à 27,
**caractérisé en ce que** le rapport $(A_E/KL)$ déterminant la perméation à travers le joint d'étanchéité (3), n'est pas supérieure à 1,00 mm, de préférence n'est pas supérieure à 0,25 mm, à 150 °C.

**29.** Système de raccord selon l'une quelconque des revendications 1 à 28,
**caractérisé en ce qu'**une force d'enfichage $(F_S)$ à fournir pour enficher le joint d'étanchéité (3) en le déformant et pour générer la force de précontrainte $(F_V)$ avec un rayon intérieur $(R_{OI})$ de la première pièce de couplage (1) dans une zone comprise entre environ 6 mm et 13 mm est inférieure à 100 N, de préférence inférieure à 50 N, de préférence plus particulièrement inférieure à 30 N.

**30.** Système de raccord selon l'une quelconque des revendications 1 à 29,
**caractérisé en ce que** le joint d'étanchéité (3) est doté d'un revêtement constituant une barrière aux gaz.

**31.** Joint d'étanchéité (3) pour un système de raccord selon l'une quelconque des revendications 1 à 30,
**caractérisé en ce qu**e la section $(AU_{opt})$ du joint d'étanchéité (3) non comprimé est constituée, dans sa forme de base, d'un rectangle qui présente deux côtés longitudinaux à courbure convexe avec un premier rayon de courbure $(R_1)$, deux côtés transversaux à courbure convexe avec un second rayon de courbure $(R_2)$ et quatre angles convexes arrondis avec un troisième rayon de courbure $(R_3)$, le troisième rayon de courbure $(R_3)$ étant inférieur au premier rayon de courbure $(R_1)$ et le premier rayon de courbure $(R_1)$ étant inférieur au second rayon de courbure $(R_2)$.

**32.** Joint d'étanchéité (3) selon la revendication 31,
**caractérisé en ce que** le joint d'étanchéité (3) est constitué d'un composé polymère fluorocarboné, de caoutchouc synthétique, notamment de caoutchouc silicone, NBR ou H-NBR, PUR, EPDM, SBR.

**33.** Joint d'étanchéité (3) selon l'une quelconque des revendications 31 ou 32,
**caractérisé en ce qu**e le joint d'étanchéité (3) présente une dureté shore A dans la plage de 70 à 90.

**34.** Joint d'étanchéité (3) selon l'une quelconque des revendications 31 à 33,
**caractérisé en ce que** le joint d'étanchéité (3) est doté d'un revêtement constituant une barrière aux gaz.

Fig.1

# Fig.2

# Fig.3

Fig.4

Fig.5

# Fig.6

# Fig.7

Fig.8

KL (KL$_1$)

BL(A$_E$)

7 F$_V$

AU

3 3

$\underline{1}$ 6

s

p$_2$

AR

P$_1$

T

$\underline{2}$(5)

R$_{SA}$

4

R$_{SN}$

F$_V$

R$_{OI}$

B (A$_V$)

NL

Y

AU$_{opt}$

Fig.9

HB

R$_3$

R$_1$

HA

R$_2$

X

X

3

Y

## Fig.10a

## Fig.10b

## Fig.10c